(19) **Europäisches Patentamt**

**European Patent Office**

**Office européen des brevets**

(11) **EP 1 041 729 B1**

(12) **FASCICULE DE BREVET EUROPEEN**

(45) Date de publication et mention
de la délivrance du brevet:
**27.12.2006 Bulletin 2006/52**

(51) Int Cl.:
***H04B 1/707*** *(2006.01)*

(21) Numéro de dépôt: **00400798.5**

(22) Date de dépôt: **23.03.2000**

(54) **Procédé de synchronisation de rythme d'un signal numérique**

Verfahren zur Taktsynchronisierung eines digitalen Signals

Method for clock synchronisation of a digital signal

(84) Etats contractants désignés:
**AT BE CH CY DE DK ES FI FR GB GR IE IT LI LU MC NL PT SE**

(30) Priorité: **26.03.1999 FR 9903820**

(43) Date de publication de la demande:
**04.10.2000 Bulletin 2000/40**

(73) Titulaire: **FRANCE TELECOM**
**75015 Paris (FR)**

(72) Inventeurs:
• **Du Reau, Philippe**
**92220 Bagneux (FR)**
• **Duponteil, Daniel**
**92170 Vanves (FR)**
• **Yuan-Wu, Julie**
**78000 Versailles (FR)**

(74) Mandataire: **Audier, Philippe André et al**
**Brevalex**
**3, rue du Docteur Lancereaux**
**75008 Paris (FR)**

(56) Documents cités:
| | |
|---|---|
| EP-A- 0 776 106 | DE-A- 3 611 959 |
| US-A- 5 673 286 | US-A- 5 737 361 |
| US-A- 5 778 022 | US-A- 5 805 648 |

EP 1 041 729 B1

**Description**

**Domaine technique**

La présente invention a pour objet un procédé de synchronisation de rythme d'un signal numérique. Elle trouve une application dans les systèmes de transmission radioélectrique, et plus particulièrement dans les systèmes à Accès Multiple à Répartition par les Codes (AMRC en abrégé ou "CDMA" en anglais pour "Code Distribution Multiple Access").

**Etat de la technique antérieure**

Les principes d'une communication numérique et le lien existant entre signaux en bande de base et signaux sur fréquence porteuse sont connus et décrits, par exemple, dans l'ouvrage de John G. PROAKIS intitulé "Digital Communications", McGraw Hill International Editions.

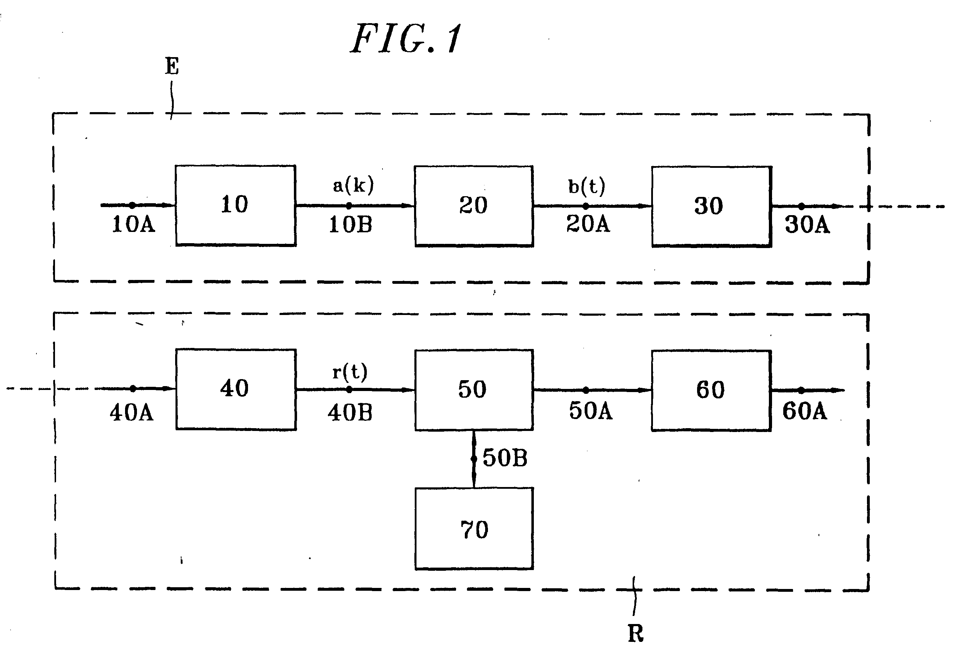

Le schéma de principe d'une chaîne de transmission numérique radioélectrique est donné en figure 1.

Dans la chaîne d'émission E, un signal numérique d'origine 10A, que l'on veut transmettre, subit un prétraitement dans un circuit 10. Ce prétraitement peut comporter diverses opérations d'embrouillage, d'entrelacement ou de codage, dont il ne sera pas question dans la suite de la description. Le circuit 10 délivre une séquence 10B de symboles numériques, notés a(k), où k désigne le rang du symbole. Le symbole a(k) est en général un nombre complexe, représenté par un couple de valeurs réelles. La fréquence des symboles a(k) est notée Hs et la période correspondante est notée Ts, avec Ts=1/Hs.

A partir de la séquence a(k), un dispositif de mise en forme 20 élabore le signal analogique en bande de base 20A à émettre, noté b(t), où t désigne la variable de temps. Le signal b(t) est un signal complexe, représenté par deux signaux réels en quadrature $b_I(t)$ et $b_Q(t)$. Le signal en bande de base 20A est transposé sur une fréquence porteuse par un émetteur radio 30. Cet émetteur comporte différents dispositifs : modulateur, transpositions de fréquence, filtres, oscillateurs locaux, amplificateurs, antenne, dont il ne sera pas question dans la suite. Il est seulement supposé que l'émetteur réalise une opération mathématique linéaire vis-à-vis du signal en bande de base. Le signal radioélectrique émis 30A se propage jusqu'au récepteur tout en subissant différentes sortes de dégradations.

Dans la chaîne de réception R, le signal radioélectrique reçu 40A est d'abord traité par un récepteur radio 40. Ce récepteur comporte différents dispositifs : antenne, moyens de transposition de fréquence, filtres, oscillateurs locaux, amplificateurs, dont il ne sera pas question dans la suite. Le récepteur 40 délivre un signal analogique en bande de base 40B, noté r(t). Le signal r(t) est un signal complexe, représenté par deux signaux réels en quadrature $r_I(t)$ et $r_Q(t)$. A partir du signal r(t), un dispositif de détection 50 élabore une suite de symboles ou d'échantillons numériques 50A. La suite des échantillons détectés 50A constitue une image plus ou moins fidèle de la séquence des symboles a(k). Les échantillons détectés 50A subissent un post-traitement dans un circuit 60. Ce post-traitement comporte diverses opérations correspondant aux opérations de prétraitement 10 de la chaîne d'émission E et délivre le signal restitué 60A.

L'élaboration de la suite des échantillons détectés 50A suppose connues exactement la valeur de la période Ts du rythme de la séquence a(k) et sa phase relativement au signal en bande de base r(t). Un dispositif de synchronisation 70, grâce aux signaux 50B qu'il échange avec le dispositif de détection 50, estime le rythme des signaux reçus et communique le résultat de cette estimation au dispositif de détection. Certains procédés de détection, dits de démodulation cohérente, requièrent également la connaissance de la phase de la fréquence porteuse des signaux radioélectriques reçus. Cette connaissance n'est pas envisagée ici, la démodulation pouvant être aussi bien cohérente que non cohérente. On suppose seulement que la fréquence de battement entre la fréquence porteuse utilisée dans le récepteur et la fréquence porteuse réelle est faible devant le rythme Hs des symboles a(k).

Le découpage fonctionnel qui vient d'être fait présente un certain arbitraire, et certaines opérations peuvent être imbriquées. On suppose toutefois la présence effective du signal en bande de base reçu 40B ou d'une représentation équivalente de ce signal sous forme d'échantillons numériques.

La présente invention porte essentiellement sur l'opération de synchronisation mise en oeuvre dans la chaîne de réception.

La synchronisation est liée à la mise en forme du signal en bande de base à émettre b(t) et aux conditions de détection correspondantes. On suppose ici que la mise en forme correspond à l'opération mathématique linéaire :

$$b(t) = \sum_k a(k).h(t-kTs)$$

où $\sum_{k}$ représente une sommation sur tous les symboles a(k) et où h(t) désigne une fonction réelle ou complexe du temps t.

Un cas important est celui de l'étalement à séquence directe où

$$h(t) = \sum_{n=0}^{N-1} \alpha(n) . g(t - nTc) .$$

Dans cette expression, $\alpha(n)$ est une famille de nombres réels ou complexes préalablement définie et indépendante de la valeur des symboles a(k) qu'on veut transmettre. Les nombres $\alpha(n)$ sont appelés "chips" selon une terminologie largement utilisée dans cette technique. A chaque rang k sont associés N chips successifs $\alpha(n)$ numérotés de n=0 à n=N-1. Les chips sont délivrés avec une période Tc=Ts/N et le rythme correspondant est noté Hc. Le nombre N de chips par symbole est appelé facteur d'étalement. La fonction g(t) est une fonction réelle ou complexe indépendante du rang k et du numéro n. Elle est appelée "fonction de mise en forme" du chip. Les systèmes de transmission AMRC à étalement par séquence directe attribuent à chaque utilisateur une famille de chips $\alpha(n)$ particulière, les différentes familles de chips étant choisies de façon à réduire le brouillage entre utilisateurs.

Bien que l'invention ne porte pas directement sur la détection proprement dite, il est nécessaire de la prendre en compte. Dans le cas d'un canal de transmission qui ne déforme pas le signal mais lui superpose seulement un signal perturbateur indépendant appelé bruit blanc gaussien, la détection optimale est obtenue par la méthode du filtrage adapté ou une méthode équivalente. Cette méthode consiste à appliquer le signal en bande de base reçu r(t) à un filtre de fonction de transfert h*(-t) pour obtenir un signal s(t) :

$$s(t) = h * (-t) * r(t)$$

où le signe * représente l'opération de conjugaison complexe lorsqu'il est placé en exposant, ou l'opération de convolution lorsqu'il est placé à mi-hauteur. En toute rigueur, le filtrage adapté est effectué à l'aide d'un filtre de fonction de transfert h*(Tr-t), où Tr est un retard fixe choisi de façon que la fonction h*(Tr-t) soit causale par rapport à la variable t. Ce retard correspond au temps nécessaire à l'aboutissement du calcul de s(t) à partir de r(t) pour un instant t donné, mais ne joue aucun rôle dans les explications qui suivent. Pour des raisons de simplicité, il est supposé nul dans la suite. Les valeurs du signal s(t) à des instants convenablement choisis constituent la suite des échantillons détectés 50A ou permettront, à l'aide d'opérations supplémentaires, d'élaborer cette suite.

Dans le cas de l'étalement à séquence directe, le filtrage adapté se décompose en un filtrage adapté à la forme du chip :

$$s_c(t) = g * (-t) * r(t)$$

et en un filtrage adapté à la séquence de chips :

$$s(t) = \sum_{n=0}^{N-1} \alpha * (n) . s_c(t + nTc)$$

où la fonction $s_c(t)$ est utilisée comme intermédiaire de calcul. Le filtrage adapté à la séquence de chips est appelé désétalement.

Il existe de nombreux procédés de récupération du rythme à partir du signal de sortie en bande de base du filtre adapté. Certains font appel à une approche globale où phase de la fréquence porteuse, phase du rythme et symboles, sont estimés conjointement. Du point de vue pratique, il est souvent plus simple d'estimer séparément la phase du rythme. De façon générale, la récupération de rythme nécessite une dérivation par rapport au temps du signal de sortie en bande de base du filtre adapté, afin de mettre en évidence les transitions du signal. Parmi les procédés possibles, certains joignent un différentiateur et une boucle à verrouillage de phase, d'autres réalisent une opération non linéaire suivie d'un filtrage et d'un détecteur de passage à zéro du signal, d'autres multiplient le signal avec lui-même retardé.

Dans la réalité, le signal radioélectrique se propage souvent de manière complexe entre l'émetteur et le récepteur en suivant plusieurs trajets différents. Il en est ainsi du canal radiomobile terrestre. Le signal reçu se présente au récepteur à des instants décalés. La détection optimale doit tenir compte de la réponse impulsionnelle du canal. Du point de vue mathématique, le filtrage adapté à la réponse impulsionnelle du canal réalise une recombinaison de tous les trajets existants. Cette opération est partiellement réalisée dans les récepteurs classiques en râteau (dits "rake receiver"), qui combinent un nombre limité de trajets. Le nombre de dispositifs de récupération de rythme élémentaire est aussi élevé que le nombre de trajets de propagation traités.

Le brevet US-A-5 778 022 divulgue un procédé de synchronisation de rythme de signal numérique conforme au préambule de la revendication 1.

Le but de l'invention est de mettre en oeuvre un procédé commun de récupération de rythme capable de faire face à un nombre très élevé de trajets.

## Description de l'invention

Dans le cas d'une transmission idéale sans bruit, le signal reçu en bande de base r(t) est lié au signal en bande de base à émettre b(t) par une expression de la forme :

$$r(t) = A.\exp(j\varphi).b(t - \tau)$$

où j désigne la partie imaginaire d'un nombre complexe ($j^2=-1$) et exp la fonction exponentielle, A et $\varphi$ représentant respectivement l'amplitude et la phase du gain du canal de transmission et $\tau$ le temps de propagation. Si la fréquence porteuse n'est pas connue exactement, le terme de phase $\varphi$ évolue lentement au cours du temps ; ce terme est annulé ou compensé dans le cas d'une démodulation cohérente. Le signal de sortie s(t) du filtre adapté est de la forme :

$$s(t) = A.\exp(j\varphi).\sum_k a(k).Rh(t - \tau - kTs)$$

où Rh(t) désigne la fonction d'autocorrélation temporelle de h(t). On choisit en général la fonction h(t) de façon que son autocorrélation Rh(t) vérifie la condition, dite de Nyquist :

$$Rh(nTs) = 0$$

pour tout nombre entier n différent de zéro, et prenne des valeurs faibles dès que la variable t prend des valeurs supérieures à quelques périodes symbole Ts. Dans ces conditions, la valeur de s(t) à l'instant $\tau+nTs$ est :

$$s(\tau + nTs) = A.\exp(j\varphi).a(n).Rh(O)$$

et sa valeur à un instant $\theta+\tau+nTs$, où la quantité $\theta$ est petite devant Ts, est approximativement :

$$s(\theta + \tau + nTs) \cong A.\exp(j\varphi).a(n).Rh(\theta)$$

Le carré du module de la quantité s($\theta$+$\tau$+nTs) est :

$$\left| s\left(\theta + \tau + nTs\right)\right|^2 \cong A^2.\left|a\left(n\right)\right|^2.\left|Rh\left(\theta\right)\right|^2$$

Si l'on s'intéresse au cas d'une modulation numérique par déplacement de phase, la valeur de $|a(n)|^2$ est alors indépendante du symbole transmis et la quantité $|s(\theta+\tau+nTs)|^2$ est approximativement proportionnelle à $|Rh(\theta)|^2$. La fonction d'autocorrélation Rh(t) prend sa valeur maximale en t=0. Si la fonction h(t) est judicieusement choisie, la fonction d'autocorrélation Rh(t) présente un pic principal étroit au voisinage de t=0 et éventuellement des maxima secondaires très atténués lorsque la valeur de t augmente. L'observation de la position des maxima successifs de $|S(t)|^2$ permet donc de localiser les instants $\tau+nTs$ et ainsi de récupérer le rythme. Dans ce qui suit, la quantité $|s(t)|^2$ sera appelée puissance du signal après filtrage adapté.

Dans le cas d'une transmission multitrajet, il n'y a pas de temps de propagation unique et, sur l'évolution de la puissance $|s(t)|^2$ au cours du temps, on observe des paquets de pics successifs situés au voisinage de la position moyenne de chaque symbole a(k). Chaque pic de corrélation correspond à un trajet de propagation particulier et chaque paquet de pics occupe un intervalle de temps qui correspond à la différence entre le temps de propagation le plus long et le temps le plus court. On appelle "fenêtre de trajets" un tel intervalle de temps. Le procédé de synchronisation proposé par l'invention consiste à placer une fenêtre sur les paquets de pics de corrélation. Le centre de la fenêtre définit alors un temps de propagation $\tau$ moyen et la position des différents trajets est repérée par rapport à ce temps.

Le signal reçu en bande de base r(t) délivré par le récepteur radio a subi un filtrage passe-bas. Son spectre de fréquence est donc limité supérieurement. Il en est de même de la fonction de mise en forme h(t). Par suite, le signal s(t) est lui aussi limité en fréquence. Du point de vue mathématique, si Fmax désigne la plus grande fréquence contenue dans les spectres des fonctions r(t), h(t) et s(t), ces fonctions sont représentées de façon exacte par leurs échantillons r(mTe), h(mTe), s(mTe) pris à des instants mTe régulièrement espacés d'une quantité Te, appelée période d'échantillonnage, sous réserve que cette quantité vérifie la condition, dite de Shannon :

$$Te < \frac{1}{2.Fmax}$$

Par commodité, on peut choisir ici comme période d'échantillonnage Te un sous-multiple de la période symbole Ts :

$$Te \simeq \frac{Ts}{M}$$

où M est un entier supérieur à 1 et compatible avec la condition de Shannon. Il n'est pas indispensable de choisir Te sous-multiple de $T_s$, mais il est indispensable que le choix de M soit compatible avec la condition de Shannon. Les échantillons de s(t) s'expriment à l'aide des échantillons de r(t) et h(t) :

$$s(mTe) = Te.\sum_i h*(iTe).r\left[(i+m).Te\right]$$

Par commodité, on travaille avec la quantité :

$$y(m) = s(mTe)/Te$$

puisque le facteur Te ne joue aucun rôle. Du point de vue pratique, la fonction h(t) prend des valeurs faibles à partir d'une certaine valeur de t et on peut limiter la sommation sur i à un intervalle compris entre deux entiers relatifs $i_1$ et $i_2$ choisis a priori selon la décroissance de h(t) :

$$y(m) = \sum_{i=i_1}^{i_2} h^*(iTe).r\big[(i+m)Te\big]$$

Les échantillons successifs $y(m_0)$, $y(m_0+1)$, ..., $y(m_0+Ne-1)$, où $m_0$ est un rang particulier et Ne un entier positif donné, sont situés dans une fenêtre d'instant initial $m_0Te$ et de largeur NeTe. L'entier Ne est bien entendu choisi en fonction de la dispersion des trajets. Une période symbole Ts contenant M périodes d'échantillonnage Te, on peut représenter le rang d'échantillonnage m sous la forme :

$$m=M.p+q$$

où p et q sont des entiers relatifs. Pour un entier $q_0$ donné, lorsque q prend les valeurs de $q_0$ à $q_0+Ne-1$ et que p prend toutes les valeurs entières possibles, on obtient une fenêtre de largeur NeTe qui se reproduit avec la période Ts.

Le procédé de synchronisation de l'invention repose, d'une part, sur le calcul de la puissance totale dans la fenêtre :

$$\sum_{m=m_0}^{m_0+Ne-1}|y(m)|^2$$

et, d'autre part, sur la répartition des puissances $|y(m)|^2$ à l'intérieur de la fenêtre.

La synchronisation comporte deux modes : un mode d'acquisition et un mode de poursuite. En mode d'acquisition, les M positions possibles, pour q=0 à M-1, de la fenêtre périodique [Mp+q;Mp+q+Ne-1] sont successivement examinées et la puissance totale, notée P(p,q) dans chaque fenêtre, est calculée :

$$P(p,q) = \sum_{i=0}^{Ne-1}|y(Mp+q+i)|^2$$

Cette puissance est plus élevée lorsqu'il y a des trajets dans la fenêtre que lorsqu'il n'y en a pas. Au moment où la puissance totale prend sa valeur maximale, le rang q a une certaine valeur $q_0$ et la fenêtre est approximativement calée sur le paquet des trajets.

On passe alors en mode de poursuite. A chaque rang i à l'intérieur de la fenêtre est associé un poids c(i) en fonction de sa position par rapport au centre de la fenêtre. Ce poids est une fonction monotone (au sens large) du rang i. La somme des puissances pondérées :

$$\sum_{i=0}^{Ne-1}c(i).|y(Mp+q_0+i)|^2$$

indique où se situe la puissance moyenne du paquet des trajets par rapport au centre de la fenêtre et peut être utilisée pour corriger l'instant d'échantillonnage et ainsi asservir la position de la fenêtre sur le paquet.

De façon précise, la présente invention a donc pour objet un procédé de synchronisation de rythme d'un signal numérique, dans lequel on échantillonne avec une certaine période d'échantillonnage un signal analogique provenant de la transmission d'un signal modulé à l'aide d'une fonction de mise en forme, on effectue un filtrage adapté des échantillons, ce filtrage étant adapté à la fonction de mise en forme utilisée par la modulation et conduisant à des échantillons de corrélation, ce procédé étant caractérisé en ce que :

- on calcule la puissance élémentaire de chaque échantillon de corrélation,
- on définit une fenêtre glissante de largeur Ne fois la période d'échantillonnage, soit NeTe, et commençant à un certain rang,
- pour chaque fenêtre glissante, on calcule la somme des puissances élémentaires des échantillons de corrélation situés dans cette fenêtre pour un symbole ou pour un nombre déterminé de symboles,
- on détermine la fenêtre pour laquelle la somme des puissances est maximale,
- la synchronisation est alors définie par la position de la fenêtre synchronisée sur la fenêtre dont la somme des puissances est maximale, et par le rang de chaque échantillon de corrélation à l'intérieur de cette fenêtre.

De préférence, on met en oeuvre deux types d'opérations et on procède en deux modes :

a) dans un premier type d'opérations, dites opérations d'exploration, on examine successivement toutes les positions possibles de la fenêtre glissante (cycle dit d'exploration), et pour chaque position, on calcule la puissance globale (Pa) des échantillons de corrélation (y(m)) contenus dans la fenêtre glissante, on identifie la fenêtre pour laquelle la puissance globale est la plus grande depuis le début du cycle jusqu'à la position actuelle, et on mémorise la valeur de cette puissance la plus grande (Pam),

b) dans un second type d'opérations, dites opérations de poursuite, on prend en compte seulement les échantillons de corrélation (z(m)) dont le rang tombe dans une fenêtre dite fenêtre de poursuite, on calcule d'une part la puissance globale (Pb) de ces échantillons, d'autre part un signal (d) permettant d'asservir le centre de cette fenêtre sur la position moyenne des puissances élémentaires qu'elle contient,

c) dans un premier mode de fonctionnement, dit mode d'acquisition,

- d'une part, à chaque fois que dans une fenêtre glissante apparaît une puissance globale (Pa) plus élevée que la dernière puissance (Pam) mémorisée depuis le début du cycle d'exploration jusqu'à la position actuelle, on affecte à la fenêtre de poursuite la position actuelle de la fenêtre glissante et on lance un processus de vérification,

- d'autre part, lorsque le cycle d'exploration se termine, on passe dans un mode dit de poursuite,

d) dans un second mode de fonctionnement, dit mode de poursuite,

- d'une part, le mécanisme de transfert de la position de la fenêtre glissante à la fenêtre de poursuite est inhibé,
- d'autre part, lorsque la vérification permanente échoue, on retourne en mode d'acquisition.

**Brève description des dessins**

- la figure 1, déjà décrite, illustre le principe d'une chaîne de transmission numérique ;
- la figure 2 est un schéma de la détection et de la synchronisation mises en oeuvre selon l'invention ;
- la figure 3 est un schéma fonctionnel du séquencement ;
- la figure 4 montre divers chronogrammes illustrant l'échantillonnage, les fenêtres glissantes, les puissances dans les fenêtres et les rangs de poursuite et de mise en forme ;
- la figure 5 illustre la distribution des puissances en exploration et en poursuite ;
- la figure 6 illustre un mode particulier de mise en oeuvre de désétalement par une méthode des registres à décalage ;
- la figure 7 illustre un autre mode de mise en oeuvre du désétalement par une méthode d'accumulation ;
- la figure 8 montre l'opération de filtrage adapté et de synchronisation dans le cas particulier d'une transmission AMRC-MDP2.

**Description détaillée de modes particuliers de mise en oeuvre**

Avant de décrire certains modes particuliers de mise en oeuvre du procédé, il n'est pas inutile de définir les différentes phases du procédé :

Opérations d'exploration

Il s'agit du déplacement de la fenêtre glissante, des calculs de puissance dans cette fenêtre, de la recherche de la position fournissant la puissance maximale.

Opérations de poursuite

Il s'agit des calculs de puissances dans la fenêtre de poursuite (même si la synchronisation n'a pas encore été obtenue), du calcul du signal d'écart de position de cette fenêtre, de l'asservissement du rythme d'échantillonnage par ce signal d'écart.

Mode d'acquisition

Dans ce mode, au cours d'un cycle d'exploration, à chaque fois qu'une puissance dans la fenêtre glissante est supérieure à la plus grande puissance enregistrée depuis le début du cycle, la position de la fenêtre glissante est communiquée à la fenêtre de poursuite. La synchronisation est en général obtenue avant la fin du cycle d'exploration, mais on n'est sûr d'être passé par la position de puissance maximale qu'en arrivant à la fin du cycle. On passe alors en mode de poursuite.

Mode de poursuite

Dans ce mode, la fenêtre de poursuite est réputée synchronisée. On interdit donc toute action du dispositif d'exploration sur la position de la fenêtre de poursuite. C'est le processus de vérification permanente qui permet de déceler une désynchronisation éventuelle et de décider un retour en mode d'acquisition.

Vérification

En mode d'acquisition, le transfert de position de la fenêtre glissante à la fenêtre de poursuite déclenche un processus de vérification. Ce processus est relancé à chaque nouveau transfert. Il n'est pas interrompu par le passage du mode d'acquisition au mode de poursuite.

Synchronisation avec économie de matériel

Dans ce cas, on utilise un seul ensemble de filtrage adapté qui, en mode d'acquisition, effectue les opérations d'exploration, puis en mode de poursuite, effectue les opérations de poursuite. Il est alors nécessaire d'attendre la fin du cycle d'exploration pour transférer la position de la fenêtre glissante de puissance maximale à la fenêtre de poursuite.

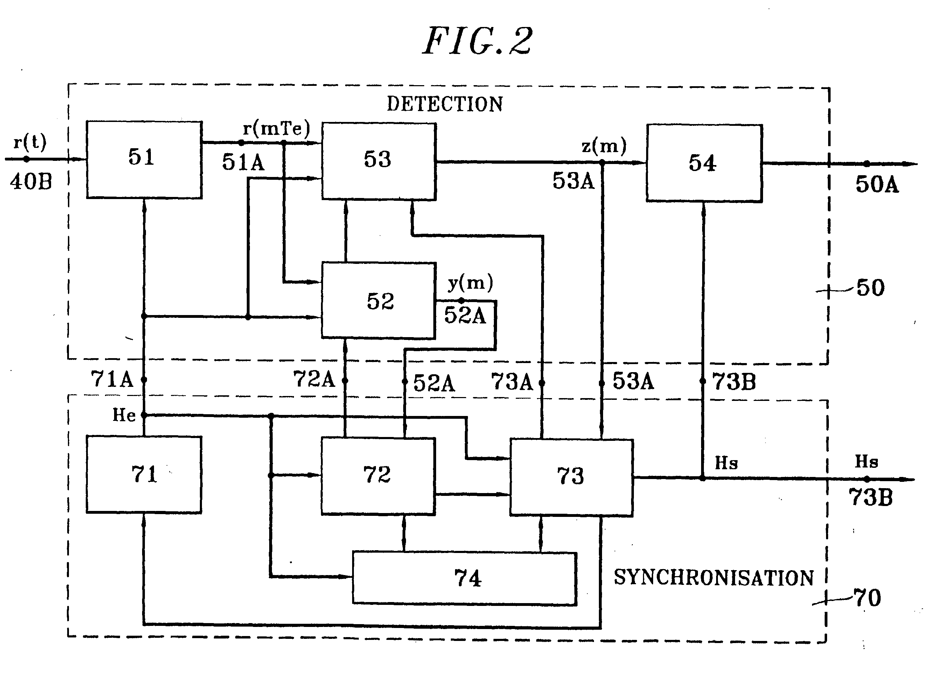

La figure 2 illustre de manière générale les opérations de détection et de synchronisation. Il s'agit d'un schéma fonctionnel dont le découpage ne correspond pas nécessairement à un découpage matériel et où ne figurent que les éléments nécessaires à la compréhension de l'invention. Le dispositif de détection 50 est composé d'un dispositif d'échantillonnage 51, de deux ensembles de filtrage adapté 52 et 53, et d'un ensemble 54 de démodulation et de traitement des trajets de propagation. Le dispositif de synchronisation 70 est composé d'un générateur de rythme 71, d'un dispositif d'exploration 72, d'un dispositif de poursuite 73 et d'un système de séquencement 74.
Le générateur de rythme 71 délivre un signal périodique 71A, dit d'échantillonnage et noté He, de période Te. A partir du signal He et du signal reçu en bande de base r(t), le dispositif d'échantillonnage 51 élabore la suite 51A des échantillons r(mTe). L'échantillonnage réalisé est asynchrone vis-à-vis de la période symbole Ts en ce sens que la phase d'échantillonnage est a priori quelconque vis-à-vis du début d'une période et que l'égalité Ts=M.Te n'est vérifiée de façon stricte que lorsque la synchronisation a été acquise.
Sous la conduite de signaux 72A envoyés par le dispositif d'exploration 72, l'ensemble de filtrage adapté en exploration 52 réalise le calcul des échantillons y(m) conformément à la relation déjà mentionnée :

$$y(m) = \sum_{i=i_1}^{i_2} h*(iTe).r\big[(i+m).Te\big]$$

Il s'agit d'un filtrage numérique transversal classique. Ce filtrage peut être obtenu par corrélation glissante : les échantillons r(mTe) transitent dans un registre à décalage au rythme He ; à chaque position i du registre est associé le coefficient fixe h*(iTe) qui sert au calcul du produit h*(iTe).r[(i+m).Te]; à chaque période d'échantillonnage Te, un nouvel échantillon y(m) est délivré. De nombreuses variantes sont possibles. Par exemple, la suite des coefficients h*(iTe) défile devant l'échantillon courant r(mTe) ou bien les échantillons y(m), y(m+M), y(m+2M), ... correspondant à des symboles successifs sont calculés en parallèle.
A partir des échantillons y(m), le dispositif d'exploration 72 calcule la puissance contenue dans la fenêtre de largeur NeTe, c'est-à-dire depuis i=0 à i=Ne-1 :

$$P(p,q) = \sum_{i=0}^{Ne-1} \left| y(Mp+q+i) \right|^2$$

Le canal de transmission n'est pas parfait : il contient du bruit et les trajets multiples de propagation ne sont pas stables. Il sera donc souvent nécessaire de prendre une moyenne de la puissance P(p,q) sur plusieurs symboles, ce qui revient à calculer une puissance notée Pa(p,q) :

$$Pa(p,q) = \sum_{w=0}^{Ns-1} P(p+w,q)$$

où Ns est le nombre de symboles considérés.

Sous la conduite de signaux 73A envoyés par le dispositif de poursuite 73 et de signaux envoyés par l'ensemble de filtrage adapté en exploration 52, l'ensemble de filtrage adapté en poursuite 53 réalise le calcul d'une suite d'échantillons z(m) selon la même relation que pour les échantillons y(m) :

$$z(m) = \sum_{i=i_1}^{i_2} h*(iTe).r\left[(i+m)Te\right]$$

La différence vient de ce que les échantillons y(m) sont calculés pour les M positions relatives possibles d'une fenêtre glissante, tandis que les échantillons z(m) sont calculés seulement pour les Ne positions situées à l'intérieur de la fenêtre synchronisée.

A partir des échantillons z(m), le dispositif de poursuite 73 calcule la puissance, notée Pu, contenue dans la fenêtre synchronisée et la puissance notée Pb sommée sur plusieurs symboles :

$$Pu(p,q) = \sum_{i=0}^{Ne-1} \left| z(Mp+q+i) \right|^2$$

$$Pb(p,q) = \sum_{w=0}^{Ns-1} Pu(p+w,q)$$

Comme ces calculs sont effectués à partir des échantillons z(m) situés dans la fenêtre synchronisée, les valeurs obtenues pour Pu et Pb peuvent différer des valeurs obtenues pour P et Pa.

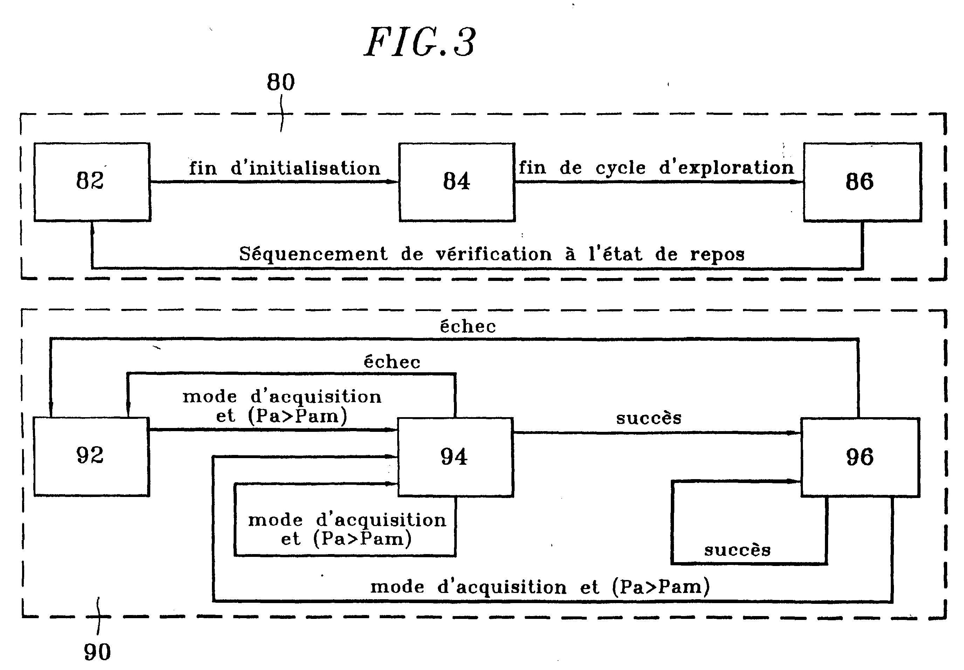

Le séquenceur 74 dirige les étapes de la synchronisation du dispositif de poursuite 73 à partir du dispositif d'exploration 72. La figure 3 illustre le processus de synchronisation, au moyen de deux diagrammes d'états : séquencement général 80 et séquencement de vérification 90. Dans ces diagrammes, les rectangles représentent des situations particulières du séquencement, les flèches indiquant le sens de l'évolution et le texte figurant sur les flèches rappelant les conditions d'évolution.

Le bloc 80 de séquencement général comprend un bloc 82 d'initialisation, un bloc 84 correspondant à un mode d'acquisition et un bloc 86 correspondant à un mode de poursuite.

Le bloc 90 de séquencement de vérification comprend un bloc 92 d'état de repos, un bloc 94 de vérification initiale et un bloc 96 de vérification permanente.

Après une phase d'initialisation (bloc 82) pour permettre aux différents circuits du dispositif de détection 50 et de synchronisation 70 de fonctionner correctement, le séquenceur se met en mode d'acquisition (bloc 84) et effectue un cycle d'exploration des M positions relatives de la suite des coefficients h*(iTe) et de la suite des échantillons $r(mT_e)$. A chaque fois qu'une nouvelle valeur de la puissance Pa est plus élevée que les précédentes, cette valeur est mémorisée et la position de la fenêtre glissante est transférée à la fenêtre du dispositif de poursuite. Ainsi, en fin de cycle d'exploration, la valeur maximale de la puissance Pa se trouve-t-elle mémorisée et le dispositif de poursuite se trouve calé sur la fenêtre de puissance maximale.

Compte tenu des imperfections du canal de transmission, il n'est pas exclu que la puissance Pa puisse prendre momentanément une valeur anormalement élevée et qu'une fausse acquisition soit obtenue. Dès qu'un transfert de position a été effectué de la fenêtre glissante d'exploration à la fenêtre de poursuite, la puissance Pb obtenue dans la fenêtre de poursuite est comparée à la puissance Pa obtenue dans la fenêtre d'exploration. Du point de vue pratique, on peut adopter la stratégie de vérification suivante en deux étapes appelées, respectivement "vérification initiale" et "vérification permanente", illustrée par le bloc 90 de la figure 3. La vérification initiale (bloc 94) détermine si la synchronisation proposée par le dispositif d'exploration est vraisemblable. La vérification permanente a pour but de déceler une éventuelle désynchronisation. Pour la vérification initiale, on peut définir un seuil relatif de puissance, noté $\lambda$, nombre réel compris entre 0 et 1. Désignant par Pam la valeur de puissance Pa mémorisée au moment d'un transfert particulier de la position de la fenêtre, on désire comparer la puissance Pb obtenue en poursuite à la valeur $\lambda$.Pam. La vérification initiale consiste à examiner parmi Na valeurs successives de la puissance Pb si au moins Nb d'entre elles sont supérieures à la quantité $\lambda$.Pam. Les nombres entiers Na et Nb sont choisis en fonction des conditions de transmission. Ils sont pris assez petits pour que le temps de vérification soit court (par exemple Na=4 et Nb=2). si l'examen donne satisfaction,, on passe en vérification permanente (bloc 96). Celle-ci consiste à comparer la puissance Pb à une quantité $\mu$.Po, où Po désigne la puissance Pb moyenne attendue dans l'état synchronisé, et $\mu$ désigne un seuil, proche de 1, choisi plus finement que le seuil $\lambda$. Mais la comparaison porte sur un grand nombre Nv de valeurs successives de Pb afin de réduire l'influence des fluctuations : on peut, par exemple, additionner les écarts Pb-$\mu$.Po obtenus sur Nv fenêtres de poursuite consécutives et considérer la synchronisation comme satisfaisante si la somme est positive, puis recommencer l'opération avec les Nv valeurs suivantes et ainsi de suite. Il faut noter que la vérification initiale et la vérification permanente peuvent être effectuées sans interruption du processus d'exploration.

En mode d'acquisition (bloc 84), l'apparition d'une puissance Pa plus élevée que la dernière puissance Pam mémorisée interrompt tout processus de vérification éventuellement en cours et lance une nouvelle vérification initiale (bloc 94). En fin de cycle d'exploration, le séquenceur passe du mode d'acquisition 84 au mode de poursuite 86 et y reste aussi longtemps qu'un échec de vérification ne s'est pas manifesté et a remis à l'état de repos le séquencement de la vérification. Le séquencement général 80 reprend alors à partir de son état d'initialisation.

Lorsque le séquenceur est en mode de poursuite 86, l'ensemble de filtrage adapté en exploration 52 et le dispositif d'exploration 72 deviennent disponibles. De façon optionnelle, le dispositif d'exploration peut continuer à chercher quelle position de la fenêtre glissante d'exploration délivre la puissance maximale. Cette position peut alors être sauvegardée à la fin de chaque cycle d'exploration. En cas de perte de synchronisation, cette position sauvegardée peut être utilisée pour lancer une réacquisition rapide.

Etant donné que les ensembles de filtrage adapté en exploration et en poursuite effectuent le même type de calculs, on peut n'utiliser qu'un seul ensemble de filtrage adapté qui fonctionne d'abord en exploration puis en poursuite. Par rapport au séquencement précédent, il est seulement nécessaire d'attendre la fin du cycle d'exploration pour entreprendre la vérification, et le temps moyen d'acquisition est plus long. Toutefois, le volume des calculs effectués dans l'ensemble de filtrage en exploration est souvent d'un ordre de grandeur supérieur au volume correspondant des calculs de l'ensemble de filtrage en poursuite de sorte que la suppression d'un ensemble de filtrage n'apporte pas une économie matérielle significative.

La synchronisation, obtenue selon le séquencement qui vient d'être décrit, est maintenue en asservissant le générateur de rythme d'échantillonnage 71 (figure 2) sur l'écart de position de la fenêtre de poursuite par rapport à la position jugée idéale. Le signal d'écart, noté d, est obtenu à partir des échantillons z(m) de sortie de l'ensemble de filtrage en poursuite 53 comme somme des puissances pondérées dans la fenêtre, conformément à ce qui a été évoqué plus haut :

$$d = \sum_{i=0}^{Ne-1} c(i) . \left| z(Mp + q_0 + i) \right|^2$$

où $q_0$ et le rang transmis à l'ensemble de filtrage en poursuite 53 lors de l'acquisition.

Différents choix sont possibles pour les poids c(i). On peut, par exemple, prendre c(i)=1 dans la moitié supérieure de la fenêtre et c(i)=-1 dans la moitié inférieure, ce qui revient à prendre comme signal d la différence des puissances dans chaque demi-fenêtre. On peut aussi choisir comme position idéale de la fenêtre le barycentre des puissances, c'est-à-dire choisir des poids c(i) de la forme

$$c(i) = i - \frac{Ne-1}{2}$$

où $\frac{Ne-1}{2}$ caractérise le centre de la fenêtre. Ce dernier choix conduira en général à une synchronisation plus stable que le précédent. Des choix intermédiaires, où le poids c(i) croît, en valeur absolue, quand le rang i s'écarte du centre de la fenêtre, sont bien entendu possibles.

Le générateur de rythme 71 peut être asservi par exemple à l'aide d'une boucle à verrouillage de phase du second ordre utilisant le signal d comme signal d'erreur.

A partir de la suite des échantillons z(m) du filtrage adapté en poursuite et des indications 73B du rythme symbole Hs délivrées par le dispositif de poursuite (par exemple sous la forme premier rang d'échantillonnage de la fenêtre de poursuite), l'ensemble de démodulation et traitement des trajets 54 élabore la suite des symboles ou échantillons détectés 50A. Cet ensemble 54 effectuera en général une démodulation élémentaire sur chaque trajet de la fenêtre et recombinera les résultats.

Par commodité, dans tout ce qui précède, la synchronisation a été décrite dans le cas où la fonction de mise en forme h(t) ne dépend pas du rang k du symbole. Dans certains cas importants, la mise en forme dépend du rang k du symbole, mais non du symbole a(k) lui-même. Si les fonctions de mise en forme successives sont convenablement choisies, il peut en résulter certains avantages : possibilité de faire face à des trajets multiples de propagation se dispersant sur une durée supérieure à la période symbole, de réduire ou d'uniformiser des effets de brouillage.

On envisage ici le cas d'une séquence de K fonctions de mise en forme successives, notées h(k,t) pour k=0 à K-1, qui se répètent périodiquement tous les K symboles. La synchronisation consiste alors non seulement à localiser les échantillons dans une période symbole mais aussi les symboles reçus par rapport à la séquence des fonctions h(k, t). Le signal de sortie s(t) du filtre adapté doit alors être remplacé par K signaux s(k,t). L'ensemble de filtrage adapté en exploration délivre K suites d'échantillons y(k,m) pour k=0 à K-1 :

$$y(k,m) = \sum_{i=i_1}^{i_2} h*(k,iTe).r\big[(i+m).Te\big]$$

Les fonctions de mise en forme h(k,t) sont supposées convenablement choisies pour que leurs fonctions d'intercorrélation prennent des valeurs faibles. Pour une valeur donnée de k, les produits h*(k,iTe).r[(i+m).Te] qui ont une contribution importante dans le calcul de y(k,m) sont alors ceux qui correspondent au passage des symboles de rang k+wK, où w désigne un entier relatif quelconque. La puissance des échantillons y(k,m) dans une fenêtre glissante est encore utilisable pour chercher la synchronisation.

Dès que le nombre K dépasse quelques unités, il devient difficile d'utiliser K filtres adaptés fonctionnant simultanément. On peut adopter alors la stratégie suivante. On suppose que le filtre adapté en exploration est composé d'un registre à décalage de longueur $i_2-i_1-1$, dans lequel transitent les échantillons r(mTe), et d'un registre de longueur $i_2-i_1+1$ qui contient les coefficients h*(k,iTe). A l'instant $(i_2+m_0).Te$, où $m_0$ est un entier particulier, le registre à décalage contient les échantillons $r[(i_1+m_0).Te]$, $r[(i_1+m_0+1).Te]$, ..., $r[(i_2+m_0).Te]$ et le registre des coefficients est chargé avec les valeurs $h*(k_0,iTe)$ pour un entier $k_0$ particulier. Pendant une période symbole, le filtre adapté délivre les échantillons successifs $y(k_0,m_0)$, $y(k_0,m_0+1)$, ..., $y(k_0,m_0+w)$, ..., $y(k_0,m_0+M-1)$. On charge alors le registre des coefficients avec les coefficients $h(k_0+1,iTe)$. Le filtre adapté délivre les échantillons $y(k_0+1,m_0+M)$, ..., $y(k_0+1,m_0+M+w)$, ..., $y(k_0+1,m_0+2M-1)$. Puis on poursuit l'opération avec les coefficients $h*(k_0+2,iTe)$ et ainsi de suite jusqu'au jeu de coefficients $h*(k_0+Ns-1,iTe)$ pour lequel le filtre adapté fournit les échantillons $y(k_0+Ns-1,m_0+Ns.M-Ns)$, ..., $y(k_0+Ns-1,m_0+Ns.M-Ns+w)$, ..., $y(k_0+Ns-1,m_0+Ns.M-1)$. L'examen a ainsi porté sur Ns symboles consécutifs. Les Ns échantillons $y(k_0,m_0)$, $y(k_0+1,m_0+M)$, ..., $y(k_0+Ns-1,m_0+Ns.M-Ns)$ correspondent à une position relative donnée de la séquence r(mTe) vis-à-vis des fonctions de mise en forme. Soit $p_0$ la désignation de cette position. Les Ns échantillons $y(k_0,m_0+w)$, $y(k_0+1,m_0+M+w)$, ..., $y(k_0+Ns-1,m_0+Ns.M-Ns+w)$ correspondent à une position relative, décalée de w périodes d'échantillonnage par rapport à la position relative précédente. La désignation de cette position est $p_0+w$. La puissance correspondant à cette position est :

$$\sum_{i=0}^{N_s-1} \left| y(k_0 + i, m_0 + iM + w) \right|^2$$

On obtient ainsi les puissances correspondant aux M positions $p_0$, $p_0+1$, ..., $p_0+M-1$. pour obtenir les M positions suivantes, il faut poursuivre l'opération de chargement du registre des coefficients, non pas avec les coefficients h*$(k_0+N_s,iTe)$, car on obtiendrait de nouveau les positions $p_0$ à $p_0+M-1$, mais avec les coefficients h*$(k_0+N_s-1,iTe)$, c'est-à-dire le jeu de coefficients utilisé pour l'examen du symbole précédent.

Dans ce qui vient d'être exposé, il va de soi, d'une part, que le rang k figurant dans h(k,t) et y(k,m) doit être évalué modulo K, d'autre part que les puissances élémentaires $|y(k,m)|^2$ doivent subir des mémorisations appropriées afin d'être utilisées au moment convenable dans les calculs.

L'examen des K.M positions relatives possibles, tel qu'il vient d'être décrit, peut demander un temps assez long. Pour réduire ce temps, on peut utiliser Ns filtres associés de la façon suivante. Si on numérote de 0 à Ns-1 ces filtres, la position d'entrée du registre à décalage du filtre Ns-1 est connectée à l'échantillon r(mTe) courant ; la M[ième] position du registre à décalage de chaque filtre (excepté le filtre 0) est connectée à la position d'entrée du registre à décalage du filtre précédent. Le registre des coefficients du filtre 0 est chargé avec les coefficients h*$(k_0,iTe)$, où $k_0$ est arbitraire (par exemple $k_0$=0), et chaque filtre est chargé avec les coefficients h*$(k_0+w,iTe)$ correspondant à son numéro w. A chaque période d'échantillonnage, les Ns sorties de ces filtres délivrent Ns échantillons correspondant à une même position relative de la séquence reçue r(mTe) et de la séquence des fonctions de mise en forme. Au bout de K.M périodes d'échantillonnages, toutes les positions relatives ont été examinées, sans qu'il ait été nécessaire de changer les coefficients.

Le filtre adapté en poursuite peut lui aussi être composé d'un registre à décalage dans lequel transitent les échantillons r(mTe) et d'un registre qui contient les coefficients h*(k,iTe). Lorsque le dispositif d'exploration transfère la position de la fenêtre au dispositif de poursuite, il lui communique le rang k de la fonction de mise en forme avec lequel le filtre adapté en poursuite doit commencer à travailler. Le registre des coefficients du filtre adapté en poursuite est chargé avec les coefficients h*(k,iTe) correspondants. Puis, à chaque période symbole, le contenu du registre des coefficients est renouvelé avec la séquence de coefficients h*(k,iTe) dont le rang k est incrémenté d'une unité (modulo K). Contrairement à l'ensemble de filtrage adapté en exploration, la complexité de l'ensemble de filtrage adapté en poursuite n'est pas affectée par le nombre K. Sa complexité ne dépend que de la largeur Ne.Te de la fenêtre de poursuite. Si le nombre d'échantillons Ne dans la fenêtre est au moins deux fois plus petit que le nombre d'échantillons M dans une période symbole, il est possible de réduire la longueur du registre à décalage du filtre adapté en poursuite et de calculer les échantillons z(k,m) en plusieurs étapes. Par contre, si le nombre Ne est supérieur à M, il est nécessaire d'utiliser plusieurs filtres pour obtenir simultanément les échantillons correspondant à des symboles différents.

L'invention qui vient d'être décrite s'applique, en particulier, aux communications par étalement à séquence directe. Dans ce cas, les fonctions de mise en forme h(k,t) sont de la forme :

$$h(k,t) = \sum_{n=0}^{N-1} \alpha(k,n) \cdot g(t - nTc)$$

Cette expression généralise l'expression de h(t) donnée plus haut. La famille des chips $\alpha(k,n)$ est composée de K séquences successives (k=0 à K-1) de N chips $\alpha(k,n)$. Elle résulte souvent de la combinaison d'une séquence d'étalement proprement dite de N chips et d'une séquence, dite d'embrouillage, de K.N chips. La façon de produire une telle séquence étalée embrouillée n'est pas envisagée ici et ne joue pas de rôle dans l'invention. On suppose seulement que la famille des K.N chips possède des propriétés d'autocorrélation convenables. La fonction g(t) de mise en forme du chip est supposée commune à tous les chips.

Comme indiqué plus haut, le filtrage adapté se décompose en un filtrage adapté à la forme du chip et un désétalement par la séquence de chips. Le filtrage adapté à la forme du chip est commun au filtrage en exploration et au filtrage adapté en poursuite. Il délivre aux instants mTe des échantillons x(m) :

$$x(m) = \sum_i g*(iTe) \cdot r\big[(i+m) \cdot Te\big]$$

La suite des échantillons x(m) est donc obtenue par un filtrage numérique classique au rythme d'échantillonnage He. Pour réaliser commodément le désétalement par la séquence de chips, il est nécessaire de prendre la période d'échantillonnage sous-multiple de la période chip :

$$Te = \frac{Tc}{Nc}$$

où Nc est un entier supérieur à 1. Le nombre d'échantillons M par symbole est alors : M=N.Nc.

A partir de la suite des échantillons x(m), le désétalement délivre les séquences d'échantillons y(k,m) :

$$y(k,m) = \sum_{n=0}^{N-1} \alpha * (k,n).x(m + nNc)$$

Cette expression est similaire à celle donnant y(k,m) à partir des coefficients h*(iTe) et des échantillons r(mTe), mais elle conduit à une réalisation matérielle plus simple que celle du cas général. Comme dans le cas général, les échantillons y(k,m) peuvent être obtenus par corrélation glissante : les échantillons x(m) transitent dans un registre à décalage au rythme He ; à chaque position nNc, multiple de Nc, du registre est associé le chip $\alpha$*(k,n) qui sert au calcul du produit $\alpha$*(k, n).x(m+nNc) ; à chaque période Te, un nouvel échantillon y(k,m) est délivré. Il est à noter que la longueur du registre à décalage est M=N.Nc tandis que le nombre de produits est seulement N. Les chips $\alpha$*(k,n) doivent être renouvelés dans les mêmes conditions que les coefficients h*(k,iTe) du cas général.

A partir de la même suite des échantillons x(m) issus du filtrage adapté à la forme du chip, le désétalement en poursuite délivre la suite des échantillons :

$$z(k,m) = \sum_{n=0}^{N-1} \alpha * (k,n).x(m + nNc)$$

le rang k évoluant conformément aux indications fournies par le dispositif de poursuite lors de la phase d'acquisition. Comme dans le cas général, la complexité du désétalement en poursuite ne dépend que de la largeur Ne de la fenêtre.

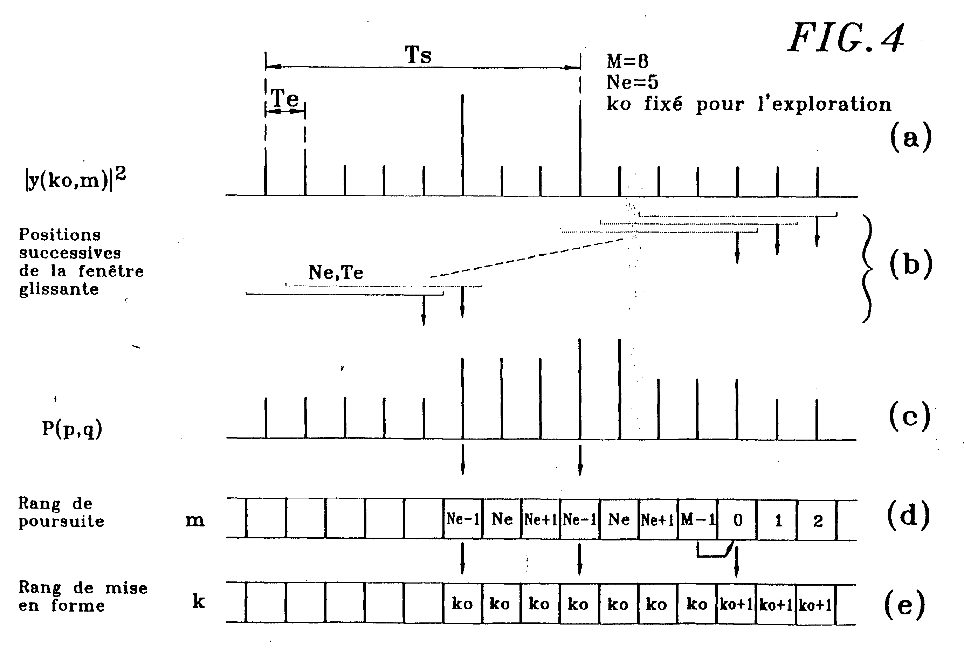

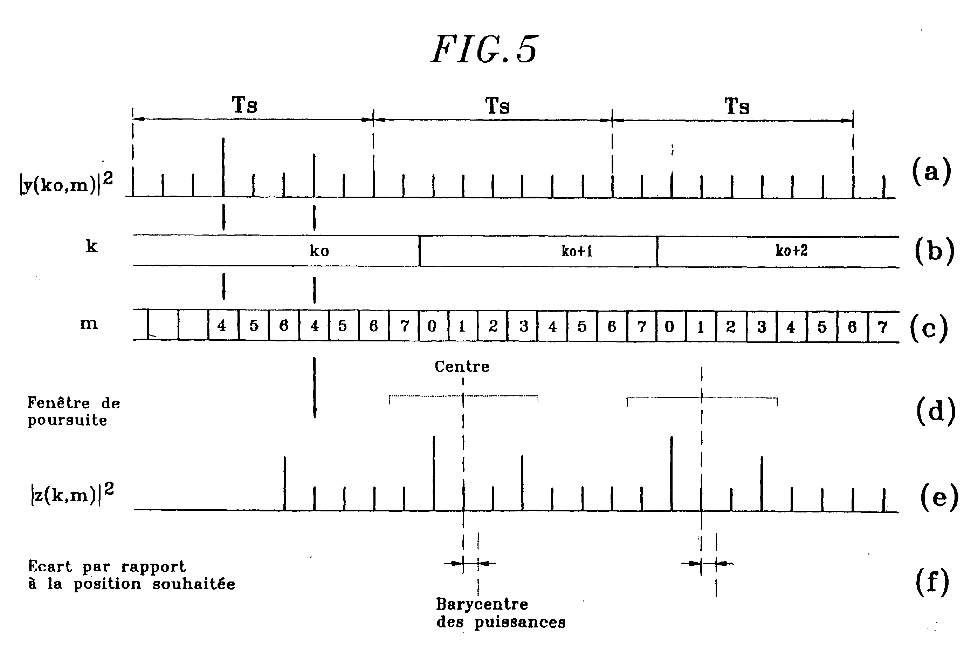

Les figures 4 et 5 illustrent le procédé de l'invention dans des situations simplifiées. Elles correspondent au cas d'une transmission avec une fonction de mise en forme h(k,t) qui dépend du rang k du symbole, comme il a été exprimé plus haut. Pour plus de simplicité, on a supposé qu'il n'y avait que deux trajets de propagation et que les calculs de puissances portent sur un seul symbole (les puissances P(p,q) et Pa(p,q) sont donc identiques). Pour cet exemple, on suppose un fonctionnement à huit échantillons par symbole (M=8) et une fenêtre de largeur 5 échantillons (Ne=5).

Sur la figure 4, la ligne (a) représente les puissances des échantillons, la ligne (b) les positions successives de la fenêtre glissante de largeur NeTe, la ligne (c) la puissance P(p,q) dans chaque fenêtre, la ligne (d) le rang de poursuite m et la ligne (e) le rang de mise en forme.

La figure 4 montre comment s'effectue le passage d'informations de la fenêtre glissante d'exploration à la fenêtre de poursuite. Le corrélateur de désétalement en exploration utilise la séquence de chips de référence corres- pondant à un rang $k_0$ choisi arbitrairement, mais fixe tout au long de la transmission. La séquence des échantillons r (mTe) défile dans le corrélateur ; toutes les positions relatives possibles de la séquence de référence et de la séquence reçue sont donc successivement examinées et on observe sur l'évolution de la puissance élémentaire $|y(k_0,m)|^2$ deux pics correspondant à la coïncidence avec les trajets de propagation. La puissance P(p,q) obtenue par sommation des puissances $|y(k_0,m)|^2$ est constante et faible en dehors de la zone des trajets de propagation ; sa valeur augmente lorsqu'on prend en compte le premier trajet, passe par un palier, puis augmente de nouveau lorsqu'on prend en compte le deuxième trajet ; par la suite, elle décroît par palier lorsque la fenêtre glissante abandonne le premier trajet puis le second. A chaque fois que la puissance P(p,q) augmente, un rang k de symbole et un rang m d'échantillon sont transmis au dispositif de poursuite (flèches dirigées vers le bas entre les lignes (c) et (d)). Le rang k n'est autre que $k_0$, puisque c'est le rang de la séquence de référence utilisée en exploration pour lequel l'augmentation de puissance vient de se produire. Les échantillons étant numérotés de m=0 à m=Ne-1 dans la fenêtre de poursuite, le rang m transmis est égal à Ne-1 car on peut supposer en première approximation que la fenêtre se ferme peu après le passage de la puissance par un maximum. La prise en compte du premier pic de puissance déclenche une synchronisation qui n'est pas bonne ; le passage du second pic produit la synchronisation définitive. En dehors des transferts, le rang m de poursuite est incrémenté de 1, modulo M (ligne (d)) et le rang k est incrémenté à chaque fois que le rang m passe par la valeur 0 (ligne (e)).

Sur la figure 5, la ligne (a) représente la puissance des échantillons en exploration, la ligne (b) le rang k, la ligne (c) le rang m, la ligne (d) la place de la fenêtre de poursuite, la ligne (e) la puissance des échantillons en poursuite, la ligne (f) l'écart par rapport à la position souhaitée.

Après l'apparition des deux pics correspondant aux trajets de propagation (ligne (a)), la puissance $|y(k_0,m)|^2$ ne présente plus de pics importants dans les périodes symboles qui suivent, jusqu'à ce que la fonction de mise en forme utilisée à l'émission soit de nouveau celle qui correspond au rang $k_0$. Par contre, la puissance $|z(k_0,m)|^2$ (ligne (e)) est obtenue à partir d'une séquence de référence dont le rang k évolue à chaque période symbole de la même façon que le rang d'émission ; on observe donc les deux pics de corrélation à chaque période symbole. A partir de la distribution des puissances $|z(k_0,m)|^2$ dans la fenêtre, le dispositif de poursuite calcule une position idéale, par exemple le barycentre des puissances. L'écart entre cette position et le centre de la fenêtre est utilisé pour commander le générateur de rythme. Ainsi, l'écart représenté sur la figure 5 (ligne (f)) va ralentir le générateur de rythme afin que le centre de la fenêtre se déplace vers le barycentre des puissances.

Il faut observer que, dans la plupart des cas, les échantillons sont des grandeurs complexes avec une partie réelle et une partie imaginaire. Ainsi, la suite des échantillons $r(mTe)$ est composée de deux suites réelles $r_I(mTe)$ et $r_Q(mTe)$ : $r(mTe)=r_I(mTe)+j.r_Q(mTe)$. La famille des coefficients $h^*(iTe)$ est composée de deux familles réelles $h_I(iTe)$ et $h_Q(iTe)$ : $h^*(iTe)=h_I(iTe)-j.h_Q(iTe)$. Les parties réelle $y_I(m)$ et imaginaire $y_Q(m)$ de l'échantillon $y(m)$ sont alors données par les expressions :

$$y_I(m) = \sum_{i=i_1}^{i_2}\left\{h_I(iTe).r_I\left[(i+m).Te\right] + h_Q(iTe).r_Q\left[(i+m).Te\right]\right\}$$

$$y_Q(m) = \sum_{i=i_1}^{i_2}\left\{h_I(iTe).r_Q\left[(i+m).Te\right] - h_Q(iTe).r_I\left[(i+m).Te\right]\right\}$$

dans lesquelles les calculs portent sur des nombres réels. De même, la puissance de l'échantillon $y(m)$ est donnée par la somme des puissances des parties réelles et imaginaires :

$$\left[y(m)\right]^2 = \left[y_I(m)\right]^2 + \left[y_Q(m)\right]^2$$

Le développement des expressions faisant intervenir les parties réelle $\alpha_I(n)$ et imaginaire $\alpha_Q(n)$ du chip $\alpha(n)$, ou des parties réelle $z_I(m)$ et imaginaire $z_Q(m)$ de l'échantillon $z(m)$ est similaire et immédiat. Dans certains cas particuliers, l'un ou l'autre de ces éléments peut se réduire à une suite de valeurs réelles, les calculs étant alors simplifiés.

La réalisation des filtrages adaptés a été présentée sous la forme de registres à décalage dans lesquels transitent les échantillons et de registres de coefficients ou de chips. D'autres méthodes équivalentes sont possibles ; on peut en particulier utiliser des générateurs de coefficients $h^*(iTe)$ ou de chips $\alpha(n)$ qui délivrent le coefficient ou le chip correspondant à l'échantillon courant $r(mTe)$ ou $x(m)$ et obtenir l'échantillon $y(m)$ ou $z(m)$ par accumulation de produits du type $h^*(iTe).r[(i+m).Te]$ ou $\alpha^*(n).x(m+nNc)$.

A titre d'illustration de la description qui précède, on peut décrire le cas d'une transmission AMRC avec étalement à séquence directe et modulation par déplacement de phase à 2 états (MDP2). Les symboles $a(k)$ sont des symboles binaires prenant les valeurs +1 et -1. Les éléments binaires sont souvent notés 0 et 1, mais il s'agit ici des valeurs +1 et -1 qui sont respectivement associées à ces éléments binaires 0 et 1 en vue de la modulation. Chaque symbole $a(k)$ est étalé par une séquence de N chips $\alpha(k,n)$, pour n=0 à N-1, dépendant du rang k mais indépendante de la valeur du symbole $a(k)$. Chaque chip $\alpha(k,n)$ prend l'une des valeurs +1 ou -1. La famille de chips $\alpha(k,n)$ comporte K séquences successives de N chips, numérotées de k=0 à k=K-1. Elle est donc réutilisée pour tous les K symboles. La fonction $g(t)$ de mise en forme du chip est une fonction prenant des valeurs réelles. Elle est choisie de façon que la fréquence maximale contenue dans son spectre soit inférieure au rythme chip Hc, ce qui est usuellement le cas. Il suffit, par exemple, de prendre une fonction respectant la condition de Nyquist vis-à-vis du rythme chip et dont le spectre a la forme classique d'un "cosinus surélevé" de facteur d'arrondi inférieur à 1. Compte tenu de cette propriété, le signal reçu en bande de base $r(t)$ peut être échantillonné au rythme 2.Hc, c'est-à-dire à raison de 2 échantillons par chip, sans perte d'information (sous réserve que le filtrage analogique précédent l'échantillonnage supprime les fréquences supérieures à Hc).

A partir de la suite des échantillons en bande de base r(mTe), le filtrage adapté à la forme du chip élabore une suite d'échantillons x(m) dont les parties réelle $x_I(m)$ et imaginaire $x_Q(m)$ sont données par des expressions simples portant sur des nombres réels :

$$x_I(m) = \sum_i g(iTe) \cdot r_I\big[(i+m) \cdot Te\big]$$

$$x_Q(m) = \sum_i g(iTe) \cdot r_Q\big[(i+m) \cdot Te\big]$$

Les parties réelle $y_I(k,m)$ et imaginaire $y_Q(k,m)$ de la séquence y(k,m) délivrée par le dispositif de désétalement sont données par les expressions suivantes, portant sur des nombres réels :

$$y_I(k,m) = \sum_{n+0}^{N-1} \alpha(k,n) \cdot x_I(m+2n)$$

$$y_Q(k,m) = \sum_{n=0}^{N-1} \alpha(k,n) \cdot x_Q(m+2n)$$

Ainsi, il apparaît que, pour un rang d'échantillonnage m donné, le calcul de $y_I$ et $y_Q$ n'utilise qu'un échantillon sur deux de la suite x(m). On tire des conclusions similaires pour la suite d'échantillons z(m).

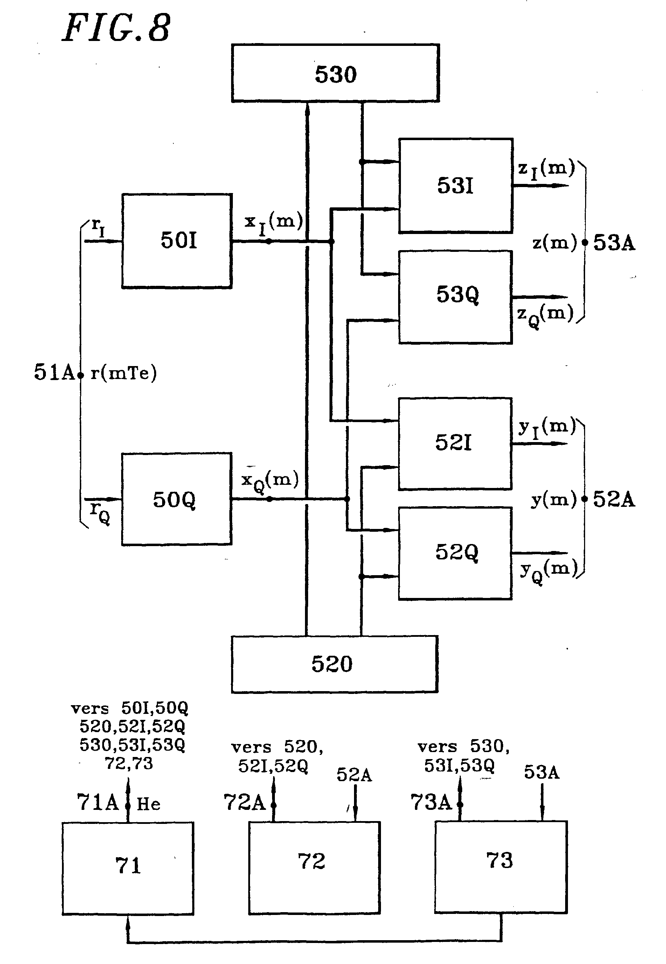

On en déduit le schéma du filtre adapté et de la synchronisation de la figure 8. Le signal reçu échantillonné 51A se compose de deux suites échantillons réels $r_I(mTe)$ et $r_Q(mTe)$ qui sont appliquées respectivement à deux filtres séparés 50I et 50Q de même fonction de transfert g(-t) réalisant le filtrage adapté au chip. Ces filtres constituent une partie commune du filtrage adapté en exploration 52 et du filtrage adapté en poursuite 53. Les suites échantillons $x_I(m)$ et $x_Q(m)$ issus de ces filtres sont appliquées simultanément aux dispositifs de désétalement en exploration et en poursuite. Le désétalement en exploration est composé d'un générateur de chips 520 et de deux circuits de désétalement proprement dit 52I et 52Q opérant respectivement sur les suites d'échantillons $x_I(m)$ et $x_Q(m)$ pour délivrer les suites échantillons $y_I(m)$ et $y_Q(m)$. De la même façon, le désétalement en poursuite est composé d'un générateur de chips 530 et de deux circuits de désétalement 53I et 53Q opérant sur les suites $x_I(m)$ et $x_Q(m)$ pour délivrer les suites d'échantillons $z_I(m)$ et $z_Q(m)$. Le dispositif d'exploration 72 opère conformément aux indications générales données plus haut : il calcule les puissances élémentaires $[y_I(m)]^2 + [y_Q(m)]^2$ puis la puissance dans une fenêtre glissante et recherche la position relative de la séquence de chips par rapport aux échantillons reçus qui conduit à la puissance maximale dans la fenêtre. De même, le dispositif de poursuite 73 opère conformément au cas général : il calcule les puissances élémentaires $[Z_I(m)]^2 + [Z_Q(M)]^2$, la puissance dans la fenêtre de poursuite, le signal d d'asservissement du générateur de rythme 71 ; il effectue les vérifications prescrites et délivre le rythme symbole régénéré Hs.

Le filtre adapté à la forme du chip (50I ou 50Q) est un filtre numérique classique. Il peut être réalisé, par exemple, au moyen d'un registre à décalage dans lequel transitent au rythme He les échantillons $r_I(mTe)$ ou $r_Q(mTe)$ ; à chaque position du registre est associé le coefficient g(iTe) par lequel est multiplié l'échantillon courant de cette position ; la somme des produits obtenus constitue à un instant donné l'échantillon courant $x_I(m)$ ou $x_Q(m)$.

Le générateur de chips (520 ou 530) est par exemple composé d'une table dans laquelle sont rangés les chips successifs et d'un registre compteur contenant le rang courant du chip à utiliser. Ce compteur est incrémenté d'une unité toutes les deux périodes d'échantillonnage et le chip correspondant est délivré aux circuits de désétalement. Si la loi de formation de la séquence des K.N chips est suffisamment simple, par exemple si la séquence de chips peut être déduite d'une portion quelconque de longueur donnée de la séquence, d'autres procédés de génération des chips sont possibles. De façon générale, le transfert de la position de la fenêtre glissante d'exploration à la fenêtre de poursuite consiste à transmettre le rang du compteur du générateur de chips en exploration 520 ou une portion de la séquence de chips correspondante, au moment où la puissance obtenue dans la fenêtre glissante passe par un maximum.

Le circuit de désétalement en exploration (52I ou 52Q) est, par exemple, composé d'un registre d'échantillons, d'un registre de chips, d'un registre de transit des chips et de dispositifs de sommation. Le registre d'échantillons est un registre à décalage dans lequel transitent au rythme He, les échantillons $x_I(m)$ ou $x_Q(m)$. Le registre de transit des chips est un registre à décalage dans lequel transitent, au rythme chip (c'est-à-dire ici à la moitié du rythme d'échantillonnage He), les chips provenant du générateur 520. Toutes les 2N périodes d'échantillonnage (ou toutes les 2N.Ns périodes, si on traite simultanément Ns symboles dans un registre d'échantillons contenant 2N.Ns échantillons), le contenu du registre de transit de chips est transféré dans le registre de chips. Le contenu du registre de chips reste immuable entre deux transferts. Une position sur deux du registre d'échantillons (on peut choisir aussi bien les positions de rang pair que les positions de rang impair) est associée à une position du registre de chips. Suivant la valeur +1 ou -1 des chips, le dispositif de sommation correspondant à un symbole prélève pour chaque chip l'échantillon associé courant ou son opposé et effectue la somme des valeurs prélevées ; le résultat constitue un échantillon $y_I(m)$ ou $y_Q(m)$. Conformément à ce qui a été indiqué plus haut, le générateur de chips 520 doit être convenablement réinitialisé à chaque fois que 2N.Ns positions relatives ont été examinées.

Le circuit de désétalement en exploration (52I ou 52Q) peut aussi être réalisé à l'aide d'un registre à décalage dans lequel transitent, au rythme chip, les chips provenant du générateur 520. A chaque position de ce registre sont associés deux dispositifs accumulateurs. Un dispositif accumulateur effectue, au rythme chip, la sommation, pendant une période symbole, de l'échantillon courant $x_I(m)$ ou $x_Q(m)$ de rang pair ou de la valeur opposée à cet échantillon selon que le chip présent vaut +1 ou -1. Le second dispositif effectue la même opération sur les échantillons de rangs impairs. Ainsi, si le registre à décalage comporte N positions, 2N échantillons sont successivement obtenus, correspondant à 2N positions relatives consécutives ; si le registre à décalage comporte N.Ns positions, Ns échantillons sont simultanément obtenus correspondant à des positions relatives espacées de 2N et, au bout de 2N périodes d'échantillonnage, 2N.Ns positions relatives consécutives ont été examinées.

Le circuit de désétalement en poursuite (53I ou 53Q) peut être réalisé d'une façon similaire à celle du désétalement en exploration, mais son extension est très réduite. Par exemple, si le deuxième procédé de réalisation, évoqué plus haut pour le désétalement en exploration, est choisi, seuls sont nécessaires Ne dispositifs d'accumulation, où Ne est le nombre d'échantillons contenus dans la fenêtre.

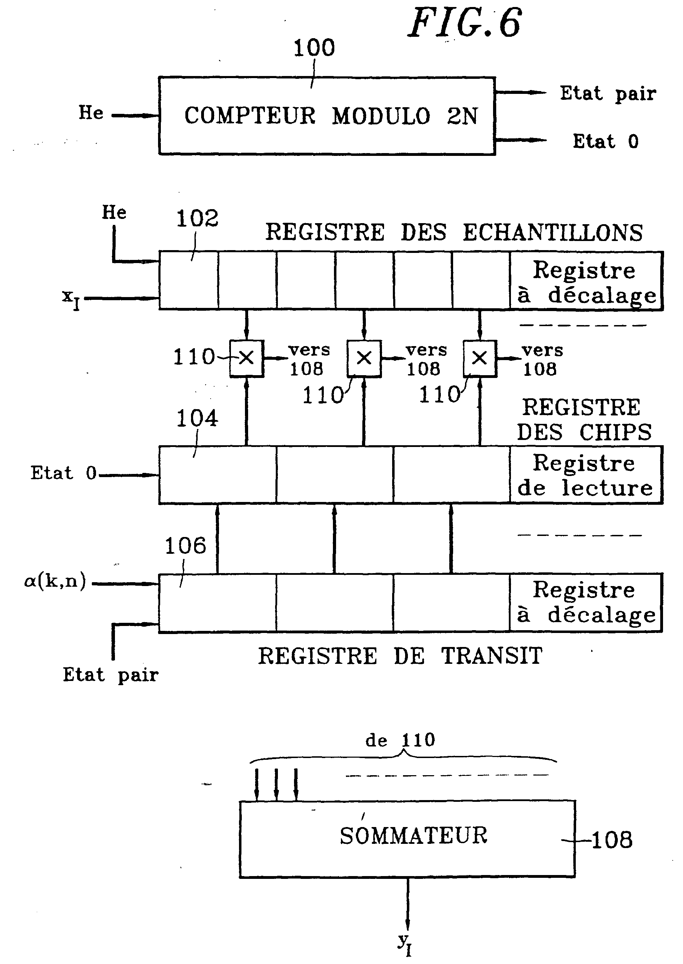

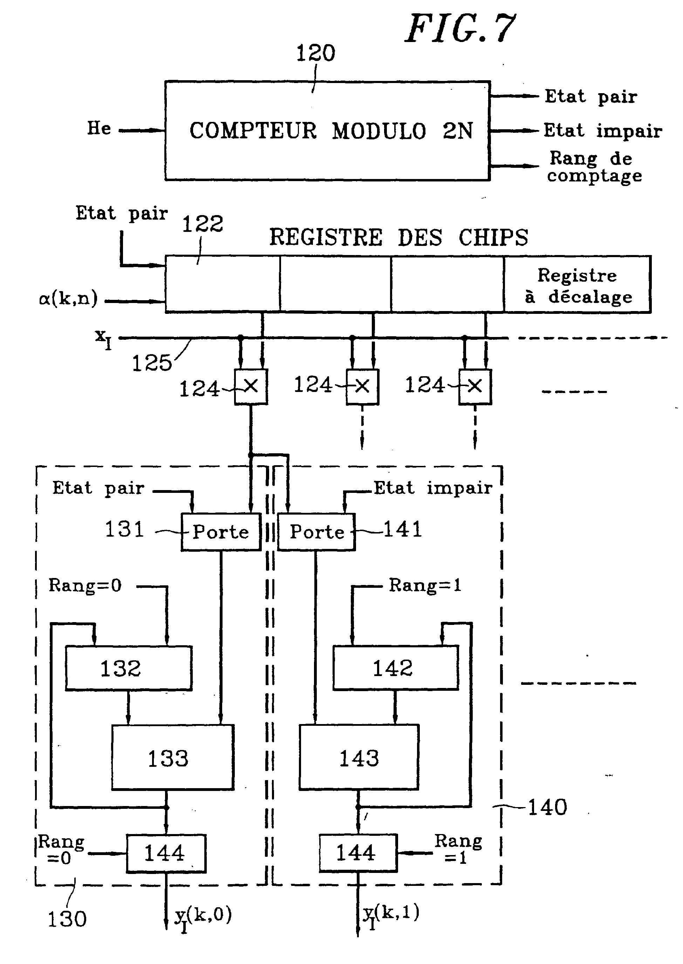

Les figures 6 et 7 illustrent ces techniques de désétalement, soit par la méthode des registres à décalage (figure 6), soit par la méthode d'accumulation (figure 7). Ces figures se rapportent toujours au cas d'une transmission AMRC avec modulation MDP2, pour des signaux reçus échantillonnés à raison de deux échantillons par chip. Elles donnent une représentation de principe des circuits de désétalement utilisables (circuits repérés 52I et 52Q pour l'exploration, 53I et 53Q pour la poursuite). Seul le circuit de la voie I et représenté (celui de la voie Q est identique). Le générateur des chips de référence $\alpha(k,n)$ n'est pas représenté. Pour la simplicité du dessin, on se limite au cas où la corrélation porte sur un seul symbole (c'est-à-dire sur 2N échantillons, N étant le facteur d'étalement) et où la largeur de la fenêtre est inférieure à la durée d'un symbole (Ne<2N). Les signaux de commande sont obtenus à partir du rythme échantillon He au moyen d'un compteur modulo 2N. L'état pair ou impair du compteur se reproduit au rythme chip, tandis qu'un rang particulier quelconque du compteur se reproduit au rythme symbole.

La figure 6 montre ainsi un compteur modulo 2N référencé 100 avec une entrée recevant le rythme d'échantillonnage He et deux sorties correspondant à un état pair (rythme chip) et à un état O (rythme symbole), un registre des échantillons 102 à 2N positions recevant un signal de décalage qui est He et comme entrée l'échantillon courant $x_I$, un registre de chips 104 recevant un signal de lecture qui est l'état 0 de sortie du compteur 100, un registre de transit 106 commandé par le signal "Etat pair" et les chips $\alpha(k,n)$ et des multiplieurs 110 multipliant les échantillons par les chips, les sorties de ces multiplieurs étant reliées à un sommateur 108, dont la sortie délivre le signal $y_I$.

La séquence des échantillons défile en permanence dans le registre des échantillons 102. La séquence des chips est introduite dans le registre de transit 106, selon des conditions qui dépendent de l'utilisation (exploration ou poursuite). Elle est transférée par blocs à chaque période symbole dans le registre des chips 104. La corrélation est effectuée toutes les deux positions du registre des échantillons.

A l'opposé, la figure 7 montre comment le désétalement peut être obtenu par accumulation des corrélations partielles de l'échantillon courant reçu $x_I$ et d'une portion glissante de la séquence des chips $\alpha(k,n)$. Le circuit représenté comprend un compteur modulo 2N référencé 120 avec une entrée recevant le rythme d'échantillonnage He et trois sorties délivrant un signal "Etat pair", "Etat impair" et le "rang de comptage", un registre des chips 122 recevant comme signal de décalage le signal "Etat pair" et comme entrée les chips $\alpha(k,n)$, des multiplieurs 124 à deux entrées, l'une reliée à la sortie d'une cellule du registre 122 et l'autre à une ligne 125 recevant l'échantillon courant $x_I$, des ensembles d'accumulation 130, 140, etc... comprenant une porte 131 (141) commandée par le signal "Etat pair" (Etat impair) et par la sortie du multiplieur 124, un circuit d'initialisation 132 (142) recevant le signal "Rang=0" (Rang=1), un additionneur-accumulateur 133 (143) relié à la porte 131 (141), la sortie de cet additionneur étant rebouclée sur le circuit d'initialisation 132 (142), un circuit de lecture 134 (144) commandé par le signal "Rang 0" (Rang 1) et délivrant les échantillons désétalés $y_I(k, 0)$, (respectivement $y_I(k,1)$.

**Revendications**

1. Procédé de synchronisation de rythme d'un signal numérique, dans lequel on échantillonne avec une certaine période d'échantillonnage (Te) un signal analogique (r(t)) provenant de la transmission d'un signal (b(t)) modulé à l'aide d'une fonction de mise en forme (20), on effectue un filtrage adapté (52, 53) des échantillons (r(mTe)) ce filtrage étant adapté à la fonction de mise en forme utilisée par la modulation et conduisant à des échantillons de corrélation (y(m) 52A, z(m) 53A), on calcule la puissance de chaque échantillon de corrélation (y(m)), on définit une fenêtre glissante de largeur Ne fois la période d'échantillonnage (Te), soit NeTe, et commençant à un certain rang ($m_0$), cette fenêtre glissante balayant une plage déterminée d'instants d'échantillonnage, **caractérisé en ce que** :

   - pour chaque fenêtre glissante, on calcule une puissance globale égale à la somme (Pa) des puissances des échantillons de corrélation (y(m)) situés dans cette fenêtre pour un symbole ou pour un nombre déterminé de symboles,
   - on détermine la fenêtre pour laquelle la somme des puissances des échantillons est maximale,
   - la synchronisation est alors définie par la position de la fenêtre dont la somme des puissances des échantillons est maximale, et par le rang de chaque échantillon de corrélation à l'intérieur de cette fenêtre.

2. Procédé selon la revendication 1, dans lequel on met en oeuvre deux types d'opérations et on procède en deux modes :

   a) dans un premier type d'opérations, dites opérations d'exploration, on examine successivement toutes les positions possibles de la fenêtre glissante, et pour chaque position, on calcule la puissance globale (Pa) des échantillons de corrélation (y(m)) contenus dans la fenêtre glissante, on identifie la fenêtre pour laquelle la puissance globale est la plus grande depuis le début du cycle jusqu'à la position actuelle, et on mémorise la valeur de cette puissance la plus grande (Pam),
   b) dans un second type d'opérations, dites opérations de poursuite, on prend en compte seulement les échantillons de corrélation (z(m)) dont le rang tombe dans une fenêtre dite fenêtre de poursuite, on calcule d'une part la puissance globale (Pb) de ces échantillons, d'autre part un signal (d) permettant d'asservir le centre de cette fenêtre sur la position moyenne des puissances des échantillons qu'elle contient,
   c) dans un premier mode de fonctionnement, dit mode d'acquisition,

      - d'une part, à chaque fois que dans une fenêtre glissante apparaît une puissance globale (Pa) plus élevée que la dernière puissance (Pam) mémorisée depuis le début du cycle d'exploration jusqu'à la position actuelle, on affecte à la fenêtre de poursuite la position actuelle de la fenêtre glissante et on lance un processus de vérification,
      - d'autre part, lorsque le cycle d'exploration se termine, on passe dans un mode dit de poursuite,

   d) dans un second mode de fonctionnement, dit mode de poursuite,

      - d'une part, le mécanisme de transfert de la position de la fenêtre glissante à la fenêtre de poursuite est inhibé,
      - d'autre part, lorsque la vérification permanente échoue, on retourne en mode d'acquisition.

3. Procédé selon la revendication 2, dans lequel on choisit un seuil relatif de puissance $\lambda$ compris entre 0 et 1, on calcule le produit de ce seuil par la puissance la plus grande mémorisée et on vérifie que la puissance globale (Pb) obtenue dans la fenêtre de poursuite est supérieure statistiquement à la valeur du produit.

4. Procédé selon la revendication 3, dans lequel on effectue une première vérification, dite initiale, consistant à examiner si, parmi Na valeurs successives de la puissance globale (Pb), au moins Nb d'entre elles sont supérieures au produit du seuil par la puissance la plus grande, les nombres Na et Nb étant choisis de l'ordre de quelques unités, et si c'est le cas, on passe à une seconde vérification, dite permanente, consistant à comparer la puissance globale (Pb) à une quantité $\mu$Po où $\mu$ est un seuil légèrement inférieur à 1 et où Po désigne la puissance (Pb) moyenne attendue dans l'état synchronisé, la comparaison portant sur un grand nombre de valeurs successives de la puissance globale (Pb).

5. Procédé selon la revendication 4, dans lequel, en mode d'acquisition, l'apparition, dans une fenêtre glissante, d'une puissance globale (Pa) plus élevée que la dernière puissance mémorisée (Pam) relance une nouvelle vérification initiale.

**6.** Procédé selon la revendication 2, dans lequel les puissances globales (Pa, Pb) calculées dans les fenêtres glissantes et dans la fenêtre de poursuite résultent de la somme des puissances obtenues pour plusieurs symboles.

**7.** Procédé selon la revendication 2, dans lequel, on associe un poids c(i) à chaque rang (i) d'échantillon à l'intérieur de la fenêtre de poursuite, ce poids étant fonction de la position de ce rang par rapport au centre de la fenêtre, on détermine où se situe la position moyenne des puissances des échantillons pondérés par rapport au centre de la fenêtre et l'on corrige les instants d'échantillonnage du signal analogique (r(t)) pour asservir le centre de la fenêtre sur cette position moyenne.

**8.** Procédé selon la revendication 7, dans lequel les poids c(i) sont de la forme

$$\mathtt{c(i)=i-(Ne-1)/2}$$

où la quantité (Ne-1)/2 caractérise le centre de la fenêtre.

**9.** Procédé selon la revendication 7, dans lequel les poids (c(i)) sont pris égaux à +1 dans la moitié supérieure de la fenêtre et égaux à -1 dans la moitié inférieure de la fenêtre.

**10.** Procédé selon l'une quelconque des revendications 1 à 9, dans lequel la période (Te) d'échantillonnage du signal analogique (r(t)) est une fraction de la période des symboles (Ts).

**11.** Procédé selon l'une quelconque des revendications 1 à 10, dans lequel le signal analogique (r(t)) correspond à un signal du type à accès multiple à répartition par les codes correspondant à des séquences d'étalement formés de nombres ($\alpha$(n)) appelés chips, auxquels est appliquée une mise en forme, procédé dans lequel le filtrage adapté opéré sur le signal analogique (r(t)) comprend un premier filtrage adapté à la forme des chips et délivrant des premiers échantillons (x(m)) et un second filtrage adapté aux séquences d'étalement et appliqué aux premiers échantillons, ce second filtrage adapté délivrant des seconds échantillons (y(m), z(m)) à partir desquels sont calculées les puissances des échantillons et les puissances globales situées respectivement dans les fenêtres glissantes et de poursuite.

**12.** Procédé selon la revendication 11, dans lequel l'échantillonnage du signal analogique s'effectue à une fréquence égale à k fois la fréquence des chips formant les séquences d'étalement, le second filtrage adapté utilisant alors, à un instant donné, un échantillon sur k des premiers échantillons.

**13.** Procédé selon la revendication 12, dans lequel k est égal à 2, l'échantillonnage du signal analogique étant ainsi effectué à une fréquence double de la fréquence des chips formant les séquences d'étalement, le second filtrage adapté utilisant, à un instant donné, un sur deux des échantillons.

**14.** Procédé selon l'une quelconque des revendications 1 à 13, dans lequel le signal analogique (r(t)) est un signal complexe avec une composante réelle et une composante imaginaire, et dans lequel chaque échantillon est lui aussi complexe avec une composante réelle et une composante imaginaire, le filtrage adapté opérant sur les composantes réelle et imaginaire, les puissances des échantillons et les puissances globales étant calculées en effectuant la somme des puissances des composantes réelles et imaginaires des échantillons.

**Claims**

**1.** Method of rate synchronization of a digital signal, in which an analogue signal (r(t)) originating from the transmission of a signal (b(t)) modulated with the aid of a shaping function (20) is sampled with a certain sampling period (Te), matched filtering (52, 53) of the samples (r(mTe)) is performed, this filtering being matched to the shaping function used by the modulation and leading to correlation samples (y(m) 52A, z(m) 53A), the power of each correlation sample (y(m)) is calculated, a sliding window of width Ne times the sampling period (Te) is defined, that is NeTe, and commencing with a certain rank ($m_0$), this sliding window scanning a specified range of sampling times, **characterized in that**:

- for each sliding window, a global power is calculated equal to the sum (Pa) of the powers of the correlation samples (y(m)) located in this window for a symbol or for a specified number of symbols,
- the window for which the sum of the sample powers is maximum is determined,
- the synchronization is then defined by the position of the window whose sum of the sample powers is maximum, and by the rank of each correlation sample inside this window.

**2.** Method according to Claim 1, in which two types of operation are implemented and two modes are used:

    a) in a first type of operations, called scanning operations, all the possible positions of the sliding window are successively examined, and for each position; the global power (Pa) of the correlation samples (y(m)) contained in the sliding window is calculated, the window for which the global power is the greatest from the start of the cycle up to the current position is identified, and the value of this greatest power (Pam) is stored in memory,
    b) in a second type of operations, called tracking operations, only the correlation samples (z(m)) whose rank falls within a window called a tracking window are taken into account, a calculation is made on the one hand of the global power (Pb) of these samples, and on the other hand of a signal (d) enabling the centre of this window to be locked onto the mean position of the sample powers which it contains,
    c) in a first operating mode, called an acquisition mode,

        - on the one hand, each time in a sliding window that a global power (Pa) appears higher than the last power (Pam) stored in memory since the start of the scanning cycle up to the current position, the current position of the sliding window is allocated to the tracking window and a verification process is initiated,
        - on the other hand, when the scanning cycle has finished, it passes into a so-called tracking mode,

    d) in a second operating mode, called a tracking mode,

        - on the one hand, the transfer mechanism of the position of the sliding window to the tracking window is inhibited,
        - on the other hand, when the permanent verification fails, there is a return to acquisition mode.

**3.** Method according to Claim 2, in which a relative power threshold $\lambda$ between 0 and 1 is chosen, the product of this threshold by the greatest power stored in memory is calculated and it is verified that the global power (Pb) obtained in the tracking window is statistically higher than the value of the product.

**4.** Method according to Claim 3, in which a first or initial verification is carried out, consisting in examining whether, among Na successive values of the global power (Pb), at least Nb among them are higher than the product of the threshold by the greatest power, the numbers Na and Nb being chosen of the order of a few units, and if this is the case, a second or permanent verification is carried out, consisting of comparing the global power (Pb) with a quantity $\mu$Po where $\mu$ is a threshold slightly below 1 and where Po designates the mean power (Pb) expected in the synchronized state, the comparison relating to a large number of successive values of the global power (Pb).

**5.** Method according to Claim 4, in which, in acquisition mode, the appearance, in a sliding window, of a global power (Pa) higher than the last power stored in memory (Pam) reinitiates a new initial verification.

**6.** Method according to Claim 2, in which the global powers (Pa, Pb) calculated in the sliding windows and in the tracking window result from the sum of the powers obtained for several symbols.

**7.** Method according to Claim 2, in which a weight c(i) is associated with each sample rank (i) inside the tracking window, this weight being a function of the position of this rank with respect to the centre of the window, the mean position of the weighted sample powers is determined with respect to the centre of the window and the analogue signal (r(t)) sampling times are corrected to lock the centre of the window onto this mean position.

**8.** Method according to Claim 7, in which the weights c(i) are of the form:

$$c(i) = i-(Ne-1)/2$$

where the quantity (Ne-1)/2 characterizes the centre of the window.

9. Method according to Claim 7, in which the weights (c(i)) are taken equal to +1 in the upper half of the window and equal to -1 in the lower half of the window.

10. Method according to any of Claims 1 to 9, in which the sampling period (Te) of the analogue signal (r(t)) is a fraction of the symbol period (Ts).

11. Method according to any of Claims 1 to 10, in which the analogue signal (r(t)) corresponds to a signal of the code distribution multiple access type corresponding to spread sequences formed from numbers ($\alpha$(n)) called chips, to which shaping is applied, method in which the matched filtering performed on the analogue signal (r(t)) comprises a first filtering matched to the shape of the chips and delivering first samples (x(m)) and a second filtering matched to the spread sequences and applied to the first samples, this second matched filtering delivering second samples (y(m)), z(m)) based on which the sample powers and global powers located respectively in the sliding and tracking windows are calculated.

12. Method according to Claim 11, in which the sampling of the analogue signal takes place at a frequency equal to k times the frequency of the chips forming the spread sequences, the second matched filtering then using one sample out of k of the first samples, at a given instant.

13. Method according to Claim 12, in which k is equal to 2, the sampling of the analogue signal thus taking place at a frequency, double the frequency of the chips forming the spread sequences, the second matched filtering using one out of two samples, at a given instant.

14. Method according to any of Claims 1 to 13, in which the analogue signal (r(t)) is a complex signal with a real component and an imaginary component, and in which each sample is itself also complex with a real component and an imaginary component, the matched filtering being performed on the real and imaginary components, the sample powers and global powers being calculated by taking the sum of the powers of the real and imaginary components of the samples.

**Patentansprüche**

1. Verfahren zur Taktsynchronisierung eines digitalen Signals, bei dem ein von der Übertragung eines Signals (b(t)), das mit Hilfe einer Formatierungsfunktion (20) moduliert wird, stammendes analoges Signal (r(t)) mit einer bestimmten Abtastperiode (Te) getastet wird, eine entsprechende Filterung (52, 53) der Abtastproben (r(mTe)) durchgeführt wird, wobei diese Filterung an die von der Modulation verwendete Formatierungsfunktion angepasst ist und zu Korrelationstastproben (y(m) 52A, z(m) 53A) führt, die Leistung jeder Korrelationstastprobe (y(m)) berechnet wird, ein gleitendes Fenster mit einer Breite definiert wird, die Ne mal so groß ist wie die Abtastperiode (Te), d.h. NeTe, und das in einem bestimmten Rang ($m_0$) beginnt, wobei dieses gleitende Fenster einen bestimmten Bereich von Tastzeitpunkten tastet, **dadurch gekennzeichnet, dass**

- für jedes gleitende Fenster eine globale Leistung gleich der Summe (Pa) der Leistungen der Korrelationstastproben (y(m)), die sich in diesem Fenster befinden, für ein Symbol oder für eine bestimmte Anzahl von Symbolen berechnet wird,
- das Fenster bestimmt wird, in dem die Summe der Leistungen der Abtastproben maximal ist,
- die Synchronisation dann durch die Position des Fensters, dessen Summe der Leistungen der Abtastproben maximal ist, und durch den Rang jeder Korrelationstastprobe im Inneren dieses Fensters definiert wird.

2. Verfahren nach Anspruch 1, bei dem zwei Typen von Operationen angewendet werden und bei dem gemäß zwei Modi vorgegangen wird:

a) bei einem ersten Typ von Operationen, Durchsuchungsoperationen genannt, werden nacheinander alle möglichen Positionen des gleitenden Fensters untersucht, die globale Leistung (Pa) der Korrelationstastproben (y(m)), die im gleitenden Fenster enthalten sind, wird berechnet, es wird das Fenster identifiziert, dessen globale Leistung vom Anfang des Zyklus bis zur aktuellen Position am größten ist, und der Wert dieser größten Leistung (Pam) wird gespeichert,
b) bei einem zweiten Typ von Operationen, Verfolgungsoperationen genannt, werden nur die Korrelationstastproben (z(m)) berücksichtigt, deren Rang in ein Verfolgungsfenster genanntes Fenster fällt, es wird einerseits die globale Leistung (Pb) dieser Abtastproben und andererseits ein Signal (d) berechnet, das es ermöglicht, die Mitte dieses Fensters auf die mittlere Position der Leistungen der in ihm enthaltenen Abtastproben zu regeln,
c) in einem ersten Betriebsmodus, Erfassungsmodus genannt,

- wird einerseits jedes Mal, wenn in einem gleitenden Fenster eine globale Leistung (Pa) auftritt, die höher ist als die letzte seit dem Beginn des Durchsuchungszyklus bis zur aktuellen Position gespeicherte Leistung (Pam), dem Verfolgungsfenster die aktuelle Position des gleitenden Fensters zugeteilt und ein Überprüfungsprozess gestartet,
- wird andererseits, wenn der Durchsuchungszyklus endet, in einen so genannten Verfolgungsmodus übergegangen,

d) in einem zweiten Betriebsmodus, Verfolgungsmodus genannt,

- wird einerseits der Mechanismus zur Übertragung der Position des gleitenden Fensters zum Verfolgungsfenster gesperrt,
- wird andererseits, wenn die permanente Überprüfung fehlschlägt, in den Erfassungsmodus zurückgekehrt.

3. Verfahren nach Anspruch 2, bei dem ein relativer Leistungsschwellwert $\lambda$ zwischen 0 und 1 gewählt wird, das Produkt aus diesem Schwellwert und der größten gespeicherten Leistung berechnet und überprüft wird, ob die im Verfolgungsfenster erhaltene globale Leistung (Pb) statistisch größer ist als der Wert des Produkts.

4. Verfahren nach Anspruch 3, bei dem eine erste, so genannte Anfangsüberprüfung durchgeführt wird, die darin besteht, zu untersuchen, ob unter Na aufeinander folgenden Werten der globalen Leistung (Pb) mindestens Nb von ihnen höher sind als das Produkt aus Schwellwert und größter Leistung, wobei die Zahlen Na und Nb in der Größenordnung einiger Einheiten gewählt werden, und wenn dies der Fall ist, zu einer zweiten so genannten permanenten Überprüfung übergegangen wird, die darin besteht, die globale Leistung (Pb) mit einer Menge $\mu$Po zu vergleichen, wobei $\mu$ ein Schwellwert geringfügig kleiner als 1 ist, und wobei Po die mittlere globale Leistung (Pb) bezeichnet, die im synchronisierten Zustand erwartet wird, wobei der Vergleich sich auf eine große Anzahl von aufeinander folgenden Werten der globalen Leistung (Pb) bezieht.

5. Verfahren nach Anspruch 4, bei dem im Erfassungsmodus das Auftreten in einem gleitenden Fenster einer globalen Leistung (Pa), die höher ist als die letzte gespeicherte Leistung (Pam), erneut eine Anfangsüberprüfung startet.

6. Verfahren nach Anspruch 2, bei dem die globalen Leistungen (Pa, Pb), die in den gleitenden Fenstern und im Verfolgungsfenster berechnet werden, aus der Summe der Leistungen resultieren, die für mehrere Symbole erhalten werden.

7. Verfahren nach Anspruch 2, bei dem jedem Tastprobenrang (i) innerhalb des Verfolgungsfensters ein Gewicht c(i) zugeordnet wird, wobei dieses Gewicht von der Position dieses Rangs bezüglich der Mitte des Fensters abhängt, bei dem bestimmt wird, wo sich die mittlere Position der Leistungen der gewichteten Abtastproben bezüglich der Mitte des Fensters befindet, und die Abtastzeitpunkte des analogen Signals (r(t)) korrigiert werden, um die Mitte des Fensters auf diese mittlere Position zu regeln.

8. Verfahren nach Anspruch 7, bei dem die Gewichte c(i) folgende Form haben:

$$c(i) = i - (Ne-1)/2$$

wobei die Menge (Ne-1)/2 die Mitte des Fensters kennzeichnet.

9. Verfahren nach Anspruch 7, bei dem die Gewichte (c(i)) in der oberen Hälfte des Fensters gleich +1 und in der unteren Fenster des Fensters gleich -1 genommen werden.

10. Verfahren nach einem der Ansprüche 1 bis 9, bei dem die Tastperiode (Te) des analogen Signals (r(t)) ein Bruchteil der Periode der Symbole (Ts) ist.

11. Verfahren nach einem der Ansprüche 1 bis 10, bei dem das analoge Signal (r(t)) einem Signal vom Typ Codemultiplex (CDMA) entspricht, das Spreizsequenzen entspricht, die von Chips genannten Zahlen ($\alpha$(n)) geformt werden, an die eine Formatierung angewendet wird, Verfahren, bei dem die am analogen Signal (r(t)) ausgeführte angepasste Filterung eine erste Filterung, die an die Form der Chips angepasst ist und erste Abtastproben (x(m)) liefert, und eine zweite Filterung aufweist, die an die Spreizsequenzen angepasst ist und an die ersten Abtastproben angewendet wird, wobei diese zweite angepasste Filterung zweite Abtastproben (y(m), z(m)) liefert, von denen ausgehend die Leistungen der Abtastproben und die globalen Leistungen berechnet werden, die sich in den gleitenden Fenstern bzw. in den Verfolgungsfenstern befinden.

**12.** Verfahren nach Anspruch 11, bei dem die Abtastung des analogen Signals mit einer Frequenz erfolgt, die k mal größer ist als die Frequenz der Chips, die die Spreizsequenzen bilden, wobei die zweite angepasste Filterung dann in einem gegebenen Zeitpunkt eine Abtastprobe von k ersten Abtastproben verwendet.

**13.** Verfahren nach Anspruch 12, bei dem k gleich 2 ist, wobei die Abtastung des analogen Signals so mit einer Frequenz ausgeführt wird, die das Doppelte der Frequenz der die Spreizsequenzen bildenden Chips ist, wobei die zweite angepasste Filterung in einem gegebenen Zeitpunkt jede zweite Abtastprobe verwendet.

**14.** Verfahren nach einem der Ansprüche 1 bis 13, bei dem das analoge Signal (r(t)) ein komplexes Signal mit einer reellen und einer imaginären Komponente ist, und bei dem jede Abtastprobe auch komplex mit einer reellen und einer imaginären Komponente ist, wobei die angepasste Filterung an der reellen und der imaginären Komponente durchgeführt wird, wobei die Leistungen der Abtastproben und die globalen Leistungen berechnet werden, indem die Summe der Leistungen der reellen und imaginären Komponenten der Abtastproben gebildet wird.

## FIG.1

FIG.2

# FIG.3

FIG.4

Ts

M=8
Ne=5
ko fixé pour l'exploration

(a)

$|y(ko,m)|^2$

Positions
successives
de la fenêtre
glissante

Ne,Te

(b)

$P(p,q)$

(c)

| Rang de poursuite | m | | | | | | Ne-1 | Ne | Ne+1 | Ne-1 | Ne | Ne+1 | M-1 | 0 | 1 | 2 | | (d) |

| Rang de mise en forme | k | | | | | | ko | ko | ko | ko | ko | ko | ko | ko+1 | ko+1 | ko+1 | | (e) |

EP 1 041 729 B1

# FIG.5

EP 1 041 729 B1

(a) $|y(k_0,m)|^2$

(b) $k$

(c) $m$

(d) Fenêtre de poursuite

(e) $|z(k,m)|^2$

(f) Ecart par rapport à la position souhaitée

Ts    Ts    Ts

$k_0$    $k_0+1$    $k_0+2$

| | | 4 | 5 | 6 | 4 | 5 | 6 | 7 | 0 | 1 | 2 | 3 | 4 | 5 | 6 | 7 | 0 | 1 | 2 | 3 | 4 | 5 | 6 | 7 |

Centre

Barycentre des puissances

# *FIG.6*

100

| COMPTEUR MODULO 2N |

He —→

→ Etat pair

→ Etat 0

He

102    REGISTRE DES ECHANTILLONS

| | | | | | | Registre à décalage |

$x_I$ —→

110 —[×]— vers 108    [×] — vers 108    [×] — vers 108

110    110

104    REGISTRE DES CHIPS

Etat 0 —→ | | | Registre de lecture |

106

$\alpha(k,n)$ —→ | | | Registre à décalage |

Etat pair

REGISTRE DE TRANSIT

de 110

| SOMMATEUR | —108

$y_I$

# FIG.7

120

He ——→ | COMPTEUR MODULO 2N | ——→ Etat pair
——→ Etat impair
——→ Rang de comptage

Etat pair
122    REGISTRE DES CHIPS

α(k,n) ——→ | | | | Registre à décalage |

$x_I$ ——————————
125

124→×    124→×    124→×

Etat pair ——→    ——→ Etat impair
131 —| Porte |    | Porte |— 141

Rang=0 ——→    ——→ Rang=1

| 132 |    | 142 |

| 133 |    | 143 |

—140

Rang=0 ——→ | 144 |    | 144 | ←—— Rang=1

130    $y_I(k,0)$    $y_I(k,1)$

## FIG.8